# EUROPEAN PATENT SPECIFICATION

(11) **EP 1 876 513 B1**
(45) Date of publication and mention of the grant of the patent: **14.06.2017**
(21) Application number: 07013023.2
(22) Date of filing: 03.07.2007
(51) Int. Cl.: G06F 3/0482, G06F 3/12

(54) **File management apparatus and computer program product**
Vorrichtung und Computerprogramm zur Datenverwaltung
Dispositif et programme pour ordinateur pour gérer des fichiers

(30) Priority: 07.07.2006 JP 2006187433
(43) Date of publication of application: 09.01.2008
(73) Proprietor: Brother Kogyo Kabushiki Kaisha, Nagoya-shi, Aichi-ken 467-8561 (JP)
(72) Inventor: Tanaka, Motonori, Nagoya-shi, Aichi-ken 467-8562 (JP); Ikedo, Tatsuhiro, Nagoya-shi, Aichi-ken 467-8562 (JP); Ito, Chitoshi, Nagoya-shi, Aichi-ken 467-8562 (JP)
(74) Representative: Prüfer & Partner mbB Patentanwälte · Rechtsanwälte

(56) References cited:
- US-A- 5 608 860
- US-A1- 2001 052 995
- US-A1- 2004 125 145
- US-A1- 2005 141 007
- US-B1- 6 697 090

## Description

### CROSS-REFERENCE TO RELATED APPLICATIONS

This application claims priority from JP 2006-187433, filed on July 7, 2006.

### BACKGROUND OF THE INVENTION

### 1. Field of the Invention

The present invention relates to a file management apparatus for managing a file to be transferred to a printer and a computer program product and more particularly to a file management apparatus for managing a file by drag and drop operation with a pointing device and a computer program product.

### 2. Description of Related Art

Conventionally, there has been known a printer in which an operator stores data such as characters, images, layout templates freely to print or display them as well as a printer which prints or displays data such as characters, images and layout templates stored from the beginning. In some printers, the data which the operator can set freely is produced on the printer side while there has been known a printer to which data is transferred from a personal computer (hereinafter referred to as PC) connected to the printer.

Data to be transferred to the printer is managed by personal computer as a file for each data. Although the file can be transferred to a plurality of the printers, that file is not always a file which can be printed with any printers. Often can-be-printed file differs depending on each printer or each machine type. Thus, the can-be-printed files are classified depending on each printer or machine type and stored in each folder thereby eliminating time and labor for the operator to determine whether or not the file can be transferred.

For example, Japanese Patent Application Laid-Open No.2004-157912 has disclosed an art in which layout templates or files of external character data are stored in folders classified in a predetermined way and an operator is urged to specify a folder (that is, classification of file transfer source) according to a predetermined screen displayed after a transfer software is started and select a file to be transferred through another screen, set for the transfer and transfer that file after the setting for the transfer is completed.

However, in this procedure, when transferring a file from a plurality of folders, that is, setting for transfer of the file to a plurality of printers, the screen is switched over frequently. Further, the key, mouse and the like need to be operated frequently, thereby complicating the procedure. Further, a work for management of files which can be a candidate of file to be transferred to a printer by classifying into folders beforehand is very troublesome.

US 2005/0141007 A1 discloses a generic file management apparatus according to the preamble of claim 1.

It is the technical object of the present invention to provide a file management apparatus and a computer program product that is used and executed by a file management apparatus, in which setting for transfer of a file to a printer can be carried out without changing over the screen, the number of operations of the key, mouse and the like can be reduced and necessity of managing files which can turn to a candidate of file to be transferred to the printer by classifying into folders beforehand is eliminated.

This object is achieved by the file management apparatus having the features of claim 1 and by the computer program product having the features of claim 8. The invention is further developed as set forth in the dependent claims.

### BRIEF DESCRIPTION OF THE DRAWINGS

FIG. 1 is a perspective view showing schematically a printer 1 and a personal computer 2;
FIG. 2 is a perspective view of an appearance of the printer 1 connected to the personal computer 2;
FIG. 3 is a block diagram showing the electric configuration of the personal computer 2;
FIG. 4 is an image diagram of a file management screen of a file management application;
FIG. 5 is an image diagram of a file management screen of a file management application;
FIG. 6 is an image diagram of a dialogue screen;
FIG. 7 is a flow chart showing main processing of the file management program;
FIG. 8 is a flow chart showing connected printer detection processing;
FIG. 9 is a flow chart showing file drag processing;
FIG. 10 is a flow chart showing file drag display processing;
FIG. 11 is a flow chart showing printer icon drag processing;
FIG. 12 is a flow chart of connectable machine type icon drag display processing;
FIG. 13 is a flow chart of registration file drag processing;
FIG. 14 is a flow chart of registration file drag display processing; and
FIG. 15 is a flow chart of printer selection processing.

### DETAILED DESCRIPTION OF THE PREFERRED EMBODIMENTS

Hereinafter, the preferred embodiments of a file management apparatus and computer program product of the present invention will be described in detail with reference to the accompanying drawings. As the file management apparatus of the present invention, a personal computer 2 to be connected to a printer 1 will be described. This personal computer 2 incorporates a file management program of the present invention.

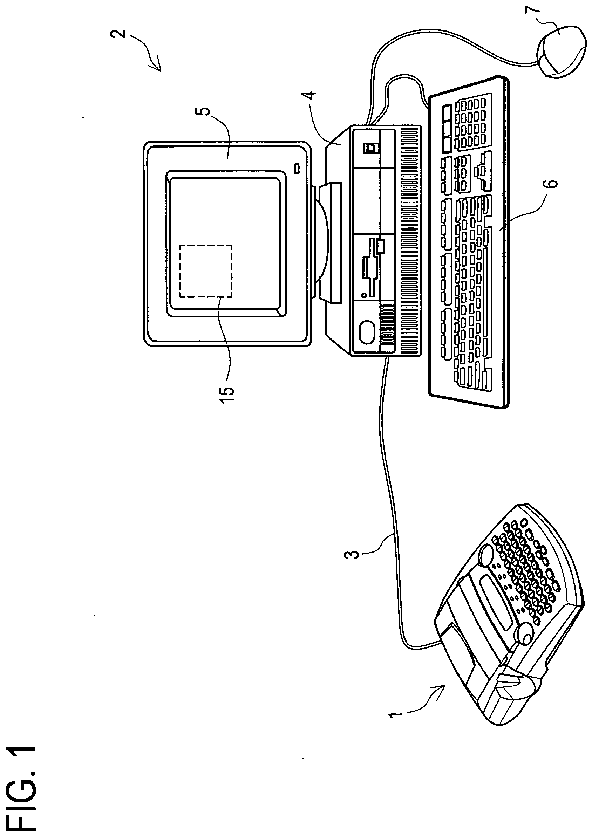

First, the personal computer 2 of this embodiment will be described with reference to FIGS. 1-15.

As shown in FIG. 1, the printer 1 and the personal computer 2 are connected with a USB cable 3 based on USB standard and exchanges data through the USB cable 3. The personal computer 2 comprises a main body 4, a monitor 5, a keyboard 6 and a mouse (pointing device) 7. The printer 1 is a tape printing unit which prints to a tape-like printing medium (tape). Although FIG. 1 shows a condition in which a single printer 1 is connected to the personal computer 2, sometimes a plurality of the printers 1 are connected thereto. Sometimes, no printer 1 is connected to the personal computer temporarily.

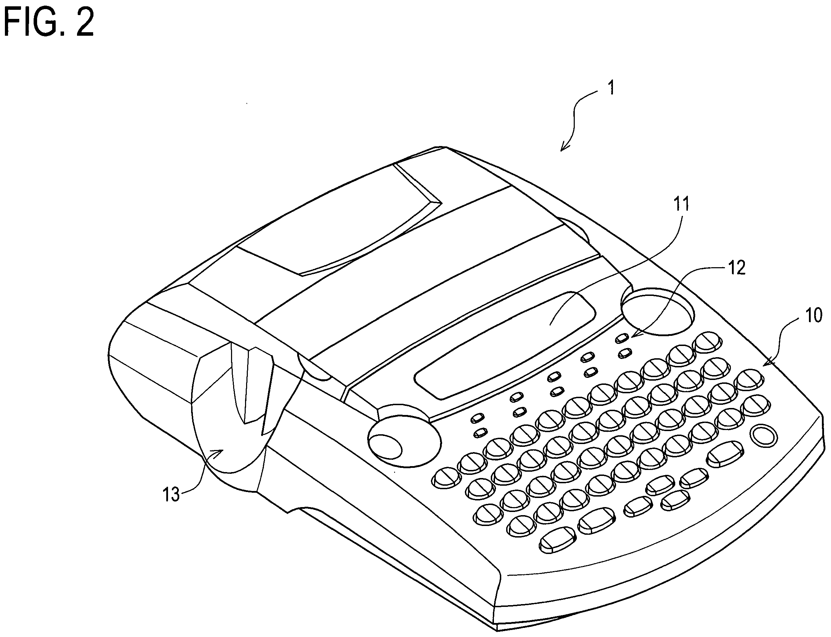

As shown in FIG. 2, the printer 1 comprises a keyboard 10 which contains a plurality of keys such as character keys and control keys on its top face and a display 11 which displays images and the like of labels to be referred to at the time of label edition and the like. The keyboard 10 includes a plurality of selection keys 12. FIG. 2 shows an example of providing with 10 function keys (PF1 - PF10 keys) arranged in 5 x 2 rows as the selection key 12. This printer 1 includes a tape drive print mechanism, tape cutting cutter and the like internally and a tape is extracted from a mounted tape cassette (not shown) and a predetermined printing is carried out thereto, then cut by the cutter and discharged out of a discharge port 13.

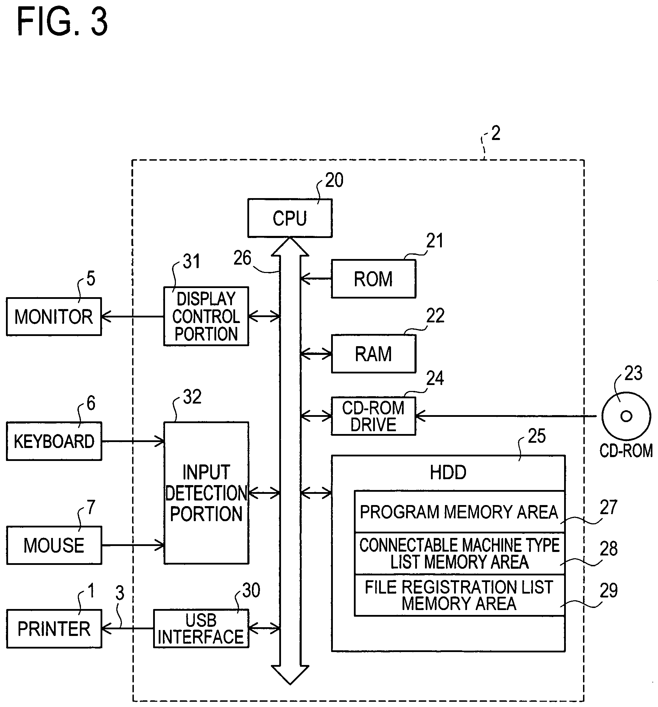

The electric configuration of the personal computer 2 will be described with reference to FIG. 3. As shown in FIG. 3, the personal computer 2 is provided with a CPU 20 for controlling the personal computer 2. A ROM 21 which stores a program such as BIOS which the CPU 20 executes, a RAM 22 which stores data temporarily, a CD-ROM drive 24 in which a CD-ROM 23 as a data memory medium is to be inserted to read its data and a HDD 25 which is a data memory device are connected to this CPU 20 through a bus 26. The RAM 22 stores a machine type list described later.

The HDD 25 includes Windows (registered trademark) OS which is to be executed by the personal computer 2, a label edit program which provides a label edition function by being operated on the Windows (registered trademark) OS executed on the personal computer 2, a file management program of the present invention which operates on the aforementioned Windows (registered trademark) OS, a program memory area 27 which stores a printer driver program and the like for controlling the printer 1 which can be connected to the personal computer 2, a connectable machine type list memory area 28 which stores a list of machine types of the printers 1 which can be connected to the personal computer 2 and a file registration list memory area 29 which stores a file registration list which is a list of files registered as a file to be transferred to the printer 1 of that type. The HDD 25 stores information such as setting, initial values and data necessary for execution of various programs.

The Windows (registered trademark) OS has a file system and its product name is Explorer. As well known, the file system of the Windows (registered trademark) OS manages files and folders which store them. The folder can be nested inside one another. The file system is of tree structure and the Explore can list files existing in a folder on a file display area 15 of the monitor 5 by specifying the folder. As well known, the Explorer is a GUI type interface, which allows copy, move, delete and the like of a file or holder by drag and drop operation with a mouse 7.

The label edition program is a program for an operator to create print data of a label to be printed by the printer 1 and can produce a layout template or external character data to be transferred to the printer 1.

A printer driver program needs to be installed in the personal computer 2 for each type of the printer 1 and when the printer driver program is installed, that type name is added to the connectable machine type list which is stored in a connectable machine type list memory area 28. The machine type list to be stored in the RAM 22 is a copy of this connectable machine type list which a printer name (not machine type name but name which can be distinguished individually if the plurality of printers 1 of the same type are connected) for distinguishing the printers 1 connected to the personal computer 2 individually at that point of time is added.

A USB interface 30 which communicates with an external device including the printer 1 through a bus 26, a display control portion 31 which executes display on the monitor 5 for indicating an operation screen for an operator, and an input detection portion 32 which is connected to the keyboard 6 or mouse 7 with which the operator inputs data and detects inputs thereby are connected to the CPU 20 through the bus 26. The personal computer 2 is provided with a flexible disk drive (not shown), I/O portions for audio data or the like, various kinds of interfaces and the like.

The CD-ROM 23 stores settings and data for use in execution of label edition program, file management program and various kinds of programs and these data are stored from the CD-ROM 23 to the HDD 25. The acquisition method of various programs and usage data of the personal computer 2 is not restricted to through the CD-ROM 23, but may be through other memory mediums such as flexible disk and MO. Further, the personal computer 2 may be connected to network and such data may be acquired from other terminal on the network.

Next, the electric configuration of the printer 1 will be described. The printer 1 is provided with a CPU (not shown) for controlling the printer 1. A ROM (not shown) which stores a program to be executed by the CPU, a RAM (not shown) which stores data temporarily and EEPROM (not shown) which stores data even if the power is turned off are connected to this CPU through a bus (not shown). The EEPROM (not shown) of the printer 1 stores a file registration list described later transferred from the personal computer 2 and a file transferred from the personal computer 2 and described in the file registration list.

Input detection portion (not shown) for detecting an input from the keyboard 10, display control portion (not shown) for controlling representation on the display 11, print control portion (not shown) for controlling drive of a tape drive print mechanism constituted of a thermal head or motor (not shown) and cut control portion (not shown) for controlling drive of a tape cutting cutter (not shown) are connected to the CPU of the printer 1.

A USB interface (not shown) which the USB cable 3 is to be connected to for connecting to the personal computer 2 is connected to the CPU of the printer 1 through a bus (not shown). The printer 1 executes various kinds of processing corresponding to a command transmitted from the personal computer 2 through the USB cable 3. The command includes a print command for printing based on print data, file transfer command for transmitting various files together with a file registration list described later and storing in the printer 1 and a file registration list read command for reading and transmitting the file registration list stored in the printer 1. Under the file transfer command, the printer 1 does not store a transmitted file registration list as it is but stores by updating the previously transmitted file registration list by changing it.

The tapes which are employed by the printer 1 and provided through a tape cassette include various kinds depending on a difference in print method, tape color, character color or whether or not the tape is to be laminated, such as direct color development tape constituted of heat sensitive tape and a tape on which thermal transfer is to be carried out using an ink ribbon.

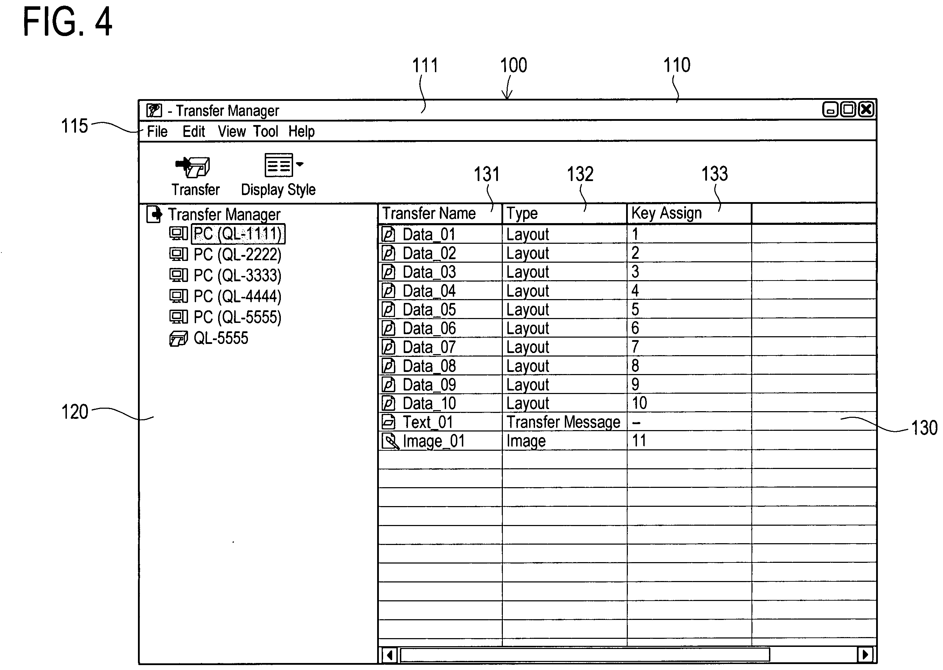

Next, a file management application which is started by executing the file management program in the personal computer 2 will be described with reference to FIGS. 4-6.

A file management screen 110 of a file management application 100 is a screen for file management such as registration of a file transferred to the printer 1, release of registration, confirmation of registration result, file transfer to the printer 1, confirmation of file transferred to the printer 1.

The file management application 100 is displayed on the monitor 5 of the personal computer 2 and allows input and instruction by operating the keyboard 6 or the mouse 7.

As shown in FIG. 4, there is a title bar 111 saying "Transfer Manager" on the topmost of the file management screen 110 of the file management application 100. A menu bar 115 for an operation instruction is provided thereunder. File menu, Edit menu, View menu, Tool menu, and Help menu are disposed on the menu bar 115. Transfer icon for instructing a file transfer to the printer 1 and display style icon for changing display style on the screen are provided under the menu bar 115 of the file management screen 110. Currently, the transfer icon is indicated in gray-out indicating that the operation is invalid.

A printer display area 120 in which an icon of the printer 1 is displayed is provided on the bottom left of the file management screen 110. An icon indicating a document and characters "Transfer Manager" are displayed in parallel from the left corner on the topmost of the printer display area 120. An icon representing the personal computer 2 and characters "PC (QL-1111)" are displayed in parallel under these. An icon representing the personal computer 2 and characters "PC(QL-2222)" are displayed in parallel under those. Three combinations of the same icon and characters are displayed in parallel, so that as for the characters, "PC(QL-3333)", "PC(QL-4444)" and "PC(QL-5555)" are displayed in succession. As a result, five icons representing the personal computer 2 are displayed.

An icon representing a printer 1 discharging paper and characters "QL-5555" are displayed further under those. In the meanwhile, the icons representing the personal computer 2 and the printer 1 discharging paper are displayed in branch to the right under the icon representing the document on the topmost of the printer display area 120 and the respective icons are connected with dotted line.

The item indicated by the icon representing the personal computer 2 indicates the type of the printer 1 which can be connected to the personal computer 2, for example, the "QL-1111" in the parentheses of the PC(QL-1111) indicates a machine type. Hereinafter, the machine type of the printer 1 which can be connected to the personal computer 2 is referred to as connectable machine type (the icon representing the personal computer 2 is called connectable machine type icon). The item indicated by the icon representing the printer 1 discharging paper indicates the name of a printer connected to the personal computer 2 at the time, for example, "QL-5555" indicates a printer name. Hereinafter, the printer 1 connected to the personal computer 2 at the time is called connected printer (the icon representing the printer 1 discharging paper is referred to as connected printer icon).

The file management screen 110 shown in FIG. 4 includes characters "PC(QL-5555)" and "QL-5555" and although both contain "QL-5555", "QL-5555" of the "PC(QL-5555)" indicates a machine type while the "QL-5555" indicates a printer name. For example, if two printers of the machine type "QL-5555" exist, the printer name is classified to "QL-5555" and "QL-5555-2". In this case, it may be classified to "QL-5555-1" and "QL-5555-2".

The file management screen 110 shown in FIG. 4 indicates five types of the connectable machines and a connected printer 1. Of the connectable machine types, a model type of QL-1111 is currently selected and the character of "PC(QL-1111)" is displayed in inverted style.

Next, a registered file display area 130 which lists files registered as a file to be transferred to the printer 1 is provided on the bottom right of the file management screen 110. The registered file display area 130 is constituted to display a list and the registered file display area 130 includes "Transfer Name" item 131 which indicates a file name of a transferred file, "Type" item 132 which indicates the kind of a transferred file, and "Key Assign" item 133 which indicates which key of the printer 1 the transferred file corresponds to.

A record in which "Transfer Name" item 131 is "Data_01", "Type" item 132 is "Layout" and "Key Assign" item 133 is "1" is displayed on the topmost portion of the registered file display area 130. Next, a record in which "Transfer Name" item 131 is "Data_02", "Type" item 132 is "Layout" and "Key Assign" item 133 is "2" is displayed. Hereinafter, if the "Transfer Name" item 131, "Type" item 132 and "Key Assign" item 133 are displayed in this order, a record in which "Data_03", "Layout" and "3" is displayed, a record in which "Data_04", "Layout" and "4" is displayed, a record in which "Data_05", "Layout" and "5" is displayed, a record in which "Data_06", "Layout" and "6" is displayed, a record in which "Data_07", "Layout" and "7" is displayed, a record in which "Data_08", "Layout" and "8" is displayed. A record in which "Data_09", "Layout" and "9" is displayed. A record in which "Data_10", "Layout" and "10" is displayed. A record in which "Text_01", "Transfer Message" and "-" is displayed. A record in which "Image_01", "Image" and "11" is displayed.

A file in which the "Type" item 132 is "Layout" indicates a layout template and is a file created by the label edition program. A key of the printer 1 is allocated to this file and after it is transferred to the printer 1, the printer 1 calls a layout template possessed by this file when the allocated key is pressed. An operator can create edition data of the label easily by inputting following the template.

A file in which the "Type" item 132 is "Transfer Message" is a known text file having character string data. This character string data is used as a message which is printed by the printer 1 if a predetermined operation is carried by the printer 1 or a predetermined condition is attained. No key of the printer 1 is allocated to this file.

A file in which the "Type" item 132 is "Image" is a known image file. This image data is used as an image which constitutes edition data of the label. A key of the printer 1 is allocated to this file and after the file is transferred to the printer 1, an image which this file possesses is called by the printer 1 as a print image when the allocated key is pressed.

The "Type" item 132 may have types indicating a file having external character data.

A file registered as a file to be transferred to the machine type of QL-1111 being selected in the printer display area 120 is displayed on a list of the registration file displayed in the registered file display area 130. When any item being selected in the printer display area 120 is changed over, the display in the registered file display area 130 is changed over together. If the item selected by the printer display area 120 is a connectable machine type, a file registration list (not shown) stored in the file registration list memory area 29 of the HDD 25 is read out. In the meantime, a file registration list of each machine type is provided.

Although "Path" item (not shown) indicating a position in which a file is stored is provided in a file registration list (not show) as well as each item displayed in the registration file display area 130, no "Path" item is displayed when the file registration list (not shown) is displayed in the registration file display area 130.

When an item selected by the printer display area 120 is a connected printer, the file registration list (not shown) stored in the file registration list memory area 29 of the HDD 25 is not read out but the file registration list (not shown) is acquired from a corresponding connected printer and displayed. In this case, there is no "Path" item originally in the file registration list (not shown).

When the item selected in the printer display area 120 is a connectable machine type, the "Transfer" icon on the printer display area 120 is changed from gray-out display to highlight display and when the operator clicks the "Transfer" icon, a file registered to be transferred to a connectable machine type being selected is transferred to a connected printer which falls under the connectable machine type being selected. At that time, if there are a plurality of connected printers which fall under the connectable machine type being selected, a special dialogue screen is opened so that the connected printer is selected.

The "Transfer" icon is changed from gray-out display to highlight display when the item selected in the printer display area 120 is a connected printer and it may be so constructed that a file registered to be transferred to a connectable machine type corresponding to the machine type of the connected printer is transferred to the corresponding connected printer when the operator clicks the "Transfer" icon.

According to the example shown in FIG. 4, if the "Transfer" icon is clicked when the printer name in the printer display area 120 is "QL-5555", a file registered to be transferred to a connectable of "QL-5555 (machine type corresponding to the item of "PC(QL-5555) in the display of FIG. 4) is transferred.

Although in FIG. 4, the "Key Assign" item 133 of the registered file display area 130 includes up to "11", the number of the function keys in the printer 1 differs depending on the machine type. FIG. 4 is an image diagram exemplifying the file management screen 110 and the printer 1 having the function key 10 shown in FIGS. 1, 2 is not always equal to the printer 1 of the machine type of QL-1111 shown in FIG. 4.

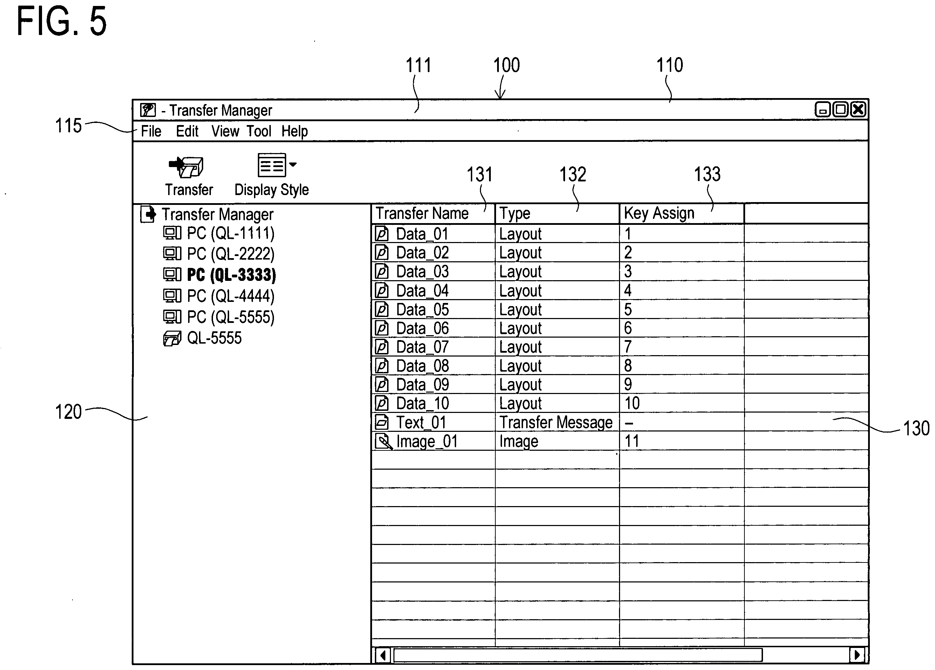

Next, FIG. 5 will be explained. FIG. 5 is an image diagram of a file management screen displayed while a file is dragged from the file display area 15 of the aforementioned Explorer.

FIG. 5 is different from FIG. 4 in representation of each item displayed in the printer display area 120. In FIG. 5, of items indicating the connectable machine types, indications (although other characters than machine type are included, hereinafter referred to as machine type indicating a connectable machine type) of "PC(QL-1111)", "PC(QL-2222)", "PC(QL-4444)" and "PC(QL-5555) corresponding to "QL-1111", "QL-2222", "QL-4444", and"QL-5555" are displayed in gray-out. Further, the "QL-5555" which is an item indicating a connected printer is displayed in gray-out.

An operation of dropping a dragged file into an item indicating a connectable machine type in the printer display area 120 indicates registration of the dropped file to be transferred to the connectable machine type in which that file is dropped and means that the operation of dropping a file to the connectable machine type displayed in gray-out is invalid. Further, because the operation of dropping a dragged file to an item indicating a connected printer in the printer display area 120 is always invalid, the item indicating the connected printer is displayed in gray-out when the file is being dragged, indicating that.

When an item displayed in gray-out in the printer display area 120 is being selected when a file is being dragged, as shown in FIG. 5, that item is displayed such that it is surrounded by dotted line instead of being displayed in inverted style. However, if the highlighted item is being selected, it is displayed in inverted style like in FIG. 4.

In FIG. 5, the connectable machine type of machine name of "QL-1111" is being selected, a file registration list (not shown) indicated in the registered file display area 130 is a file registration list corresponding to a machine type of "QL-1111".

It is permissible to register not only a dropped file to be transferred to a machine type in which that file is dropped when the file dragged from the file display area 15 of Explorer is dropped in the item of a connectable machine type displayed in the printer display area 120 but also a dropped file to be transferred to a machine type whose file registration list is displayed in the registered file display area 130 when the file is dropped in the registered file display area 130. The item of the connectable machine type (not item of connected printer) needs to be in a selected state in the printer display area 120.

When a file (registered file) displayed in the registered file display area 130 is dragged and dropped in an item of connected printer (not item of connectable machine type) in the printer display area 120, the registered file can be transferred to a connected printer immediately. However, the item of the connectable machine type (not item of connected printer) needs to be in a selected state in the printer display area 120.

In this case, the item of the connectable machine type is displayed in gray-out in the printer display area 120 when the registered file is being dragged. The item of the connected printer is displayed in gray-out if it does not correspond to any dragged registered file. This indicates that an operation of dropping any registered file into the item displayed in gray-out is invalid.

Further by dragging and dropping an item of a connectable machine type (not item of connected printer) in the printer display area 120 to a item of the connected printer (not item of connectable machine type) in the printer display area 120, a registered file which is registered in the dropped connectable machine type can be transferred to a corresponding connected printer immediately.

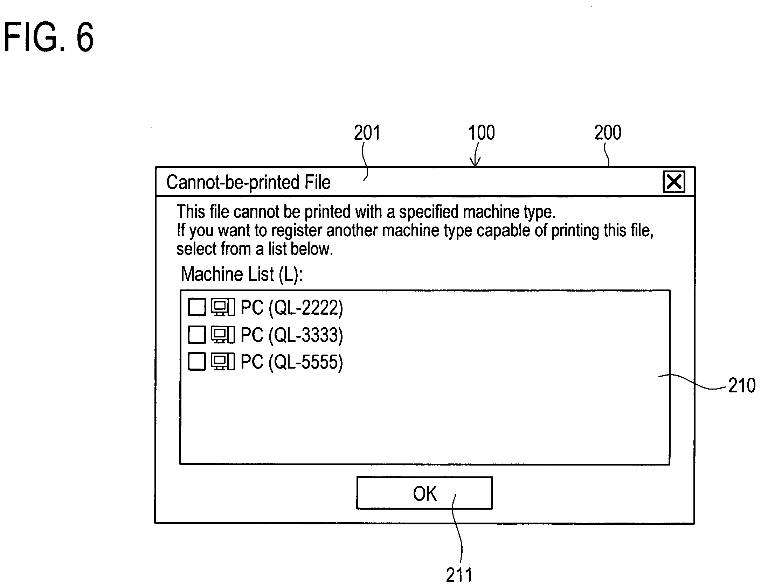

Next, a dialogue screen displayed when the operation of dragging a file from the file display area 15 of Explorer in FIG. 5 to the item of the connectable machine type in the printer display area 120 is invalid will be described with reference to FIG. 6.

As shown in FIG. 6, a dialogue screen 200 has a title bar 201 having an indication of "cannot-be-printed file" at the topmost portion. An indication of "this file cannot be printed with a specified machine type. If you want to register another machine type capable of printing this file, select from a list below" is displayed under the title bar 201. A character string of "machine type list (L):" is displayed and a machine type list display area 210 is provided under it. In the machine type list display area 210, an item comprising a connectable machine type icon and a character string of machine type name (QL-2222) of "PC(QL-2222)" is present on the topmost and an item comprising a connectable machine type icon and a character string of machine type (QL-3333) of "PC(QL-3333)" is present under it and an item comprising a connectable machine type and a character string of machine type (QL-5555) of "PC(QL-5555)" is displayed further under it. A check box is displayed in front of each item.

An OK button 211 indicating OK is provided below the machine type list display area 210. A file can be registered by clicking the check box in front of a connectable machine type in which a dragged and dropped file is desired to be registered and then clicking the OK button 211. Although only one item may be checked, it is permissible to construct that a plurality of items can be checked.

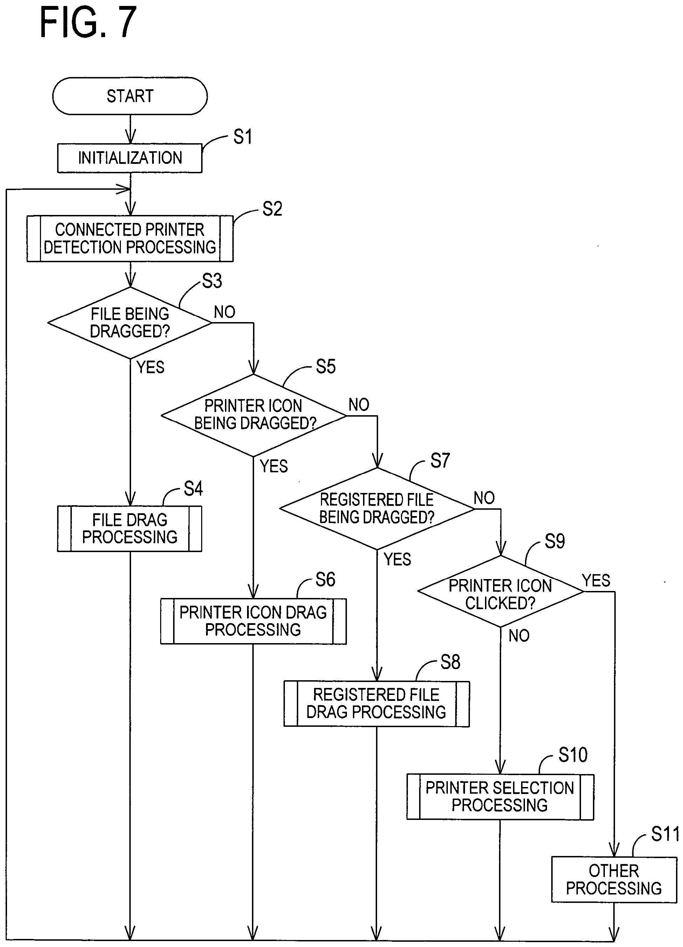

Next, processing in the personal computer 2 will be described with reference to FIGS. 7-15. In the meantime, all following processings are carried out by the CPU 20.

First, the personal computer 2 is powered on and a Windows (registered trademark) program stored in the program memory area 27 of the HDD 25 is executed by the CPU 20. Further, Explore possessed by Windows (registered trademark) OS is started and a file is displayed in the file display area 15. In this case, if a file management program stored in the program memory area 27 is executed on the Windows (registered trademark) OS, that is, if the file management program is executed by the CPU 20 in an environment in which the Windows (registered trademark) OS is executed by the CPU 20, initialization processing is carried out in S1 as shown in FIG. 7.

In the initialization processing, first, various variables in the RAM 22 are initialized. This includes coping of a connectable machine type list stored in the connectable machine type list memory area 28 of the HDD 25 into the RAM 22 as a machine type list. Thus, no printer name is included in the machine type list (not shown) in initial condition. The file management screen 110 is displayed on the monitor 5 through the display control portion 31 as shown in FIG. 4. Other various initialization processings are carried out. Consequently, the file management application 100 is started. After that, the procedure proceeds to S2.

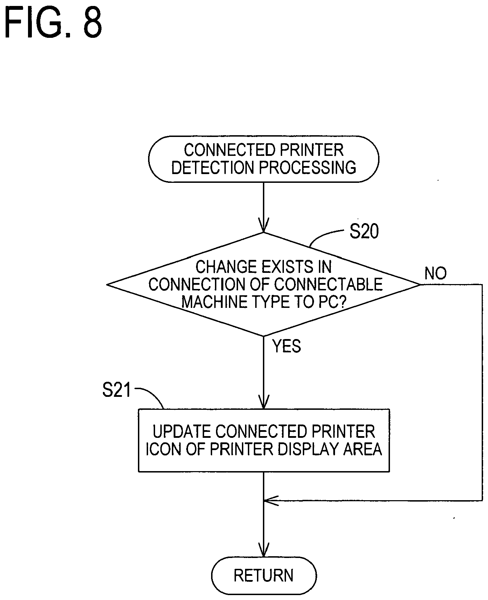

In S2, connected printer detection processing is carried out. Description of main processing with reference to FIG. 7 is interrupted here and then connected printer detection processing will be described with reference to FIG. 8.

As shown in FIG. 8, whether or not a change exists in connection of connectable machine type to the personal computer 2 is determined in S20. A printer name and machine type name are read out from all the printers 1 connected to the personal computer 2 through the USB cable 3. Whether or not a printer name read out from the printer 1 is included in machine type list (not shown) stored in the RAM 22 is determined and if it is determined that it is not included in the machine type list, whether or not a machine type read out from the printer 1 is included in machine type list (not shown) stored in the same RAM 22 is determined and if it is determined that it is included in the same machine type list, it is determined that a connectable machine type is connected to the personal computer 2.

When a printer name and machine type name are read out from all the printers 1 connected to the personal computer 2 through the USB cable 3, whether or not there is any printer name not read out although it is included in the machine type list (not shown) stored in the RAM 22 is determined and if there is any printer name not read out, it is determined that connection of a connectable machine type is released.

If the connectable machine type is connected to the personal computer 2 or connection of the connectable machine type is released, it is determined that a change exists in connection of a connectable machine type to the personal computer 2 in S20 and in other case, it is determined that no change exists.

If it is determined that a change exists in connection of a connectable machine type to the personal computer 2 (S20: YES) in S20, the procedure proceeds to S21 and if it is determined that no change exists in connection of the connectable machine type to the personal computer 2 (S20: NO), the connected printer detection processing is ended and the procedure proceeds to S3 of the main processing shown in FIG. 7.

In S21, when a new printer 1 is connected, the printer name is added to machine type list (not shown) of the RAM 22 and if connection of the printer 1 is released, the printer name is deleted from the machine type list (not shown) of the RAM 22. In the meantime, whether an item included in the machine type list is machine type or printer name can be determined. Then, indication about addition or deletion of the item (connected printer icon and printer name) of a connected printer to/from the printer display area 120 of the file management screen 110 is updated. After that, the connected printer detection processing is ended and the procedure proceeds to S3 of the main processing shown in FIG. 7.

Return to FIG. 7 for a further description. In S3, whether or not a file displayed in the file display area 15 of Explorer is being dragged with the mouse 7 is determined. If it is determined that it is being dragged (S3: YES), the procedure proceeds to S4 and if it is determined that it is not being dragged (S3: NO), the procedure proceeds to S5.

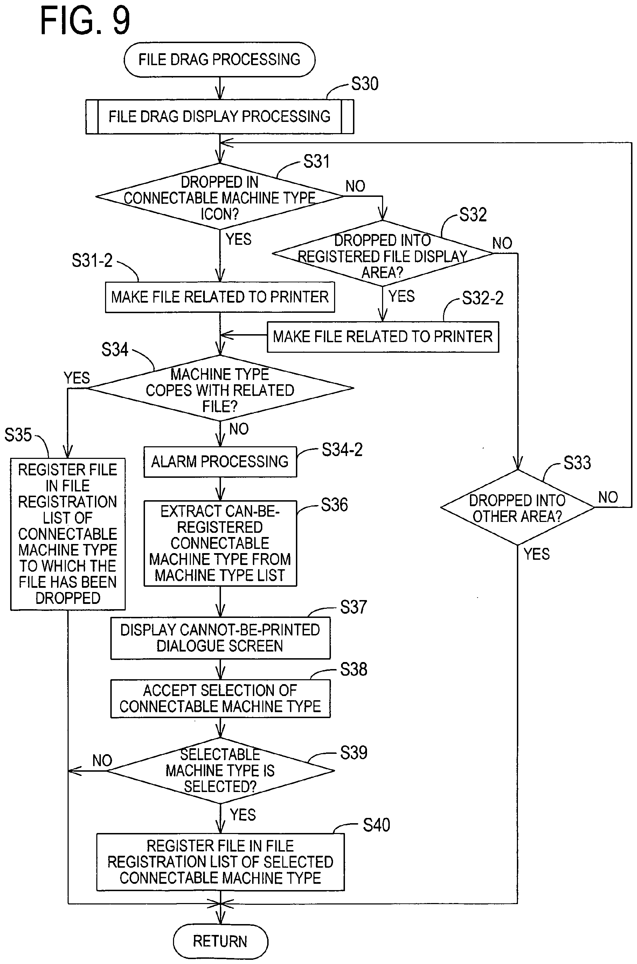

File drag processing is carried out in S4. Description of the main processing with reference to FIG. 7 is interrupted here and then the file drag processing will be described with reference to FIG. 9.

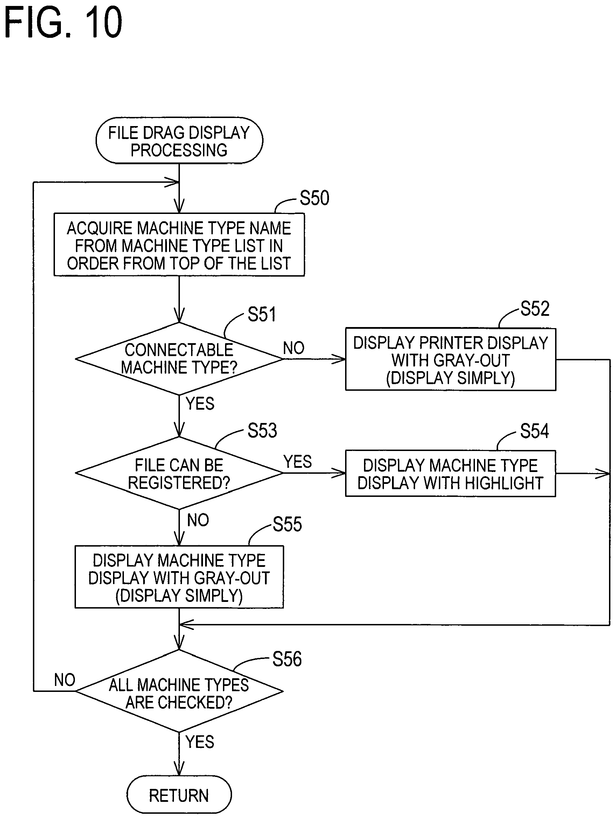

In S30, the file drag display processing is carried out. Description of the file drag processing with reference to FIG. 9 is interrupted here and then the file drag processing will be described with reference to FIG.10.

In S50, a machine type name or a printer name is acquired one by one at a time from the machine type list (not shown) of the RAM 22. The acquisition at this time is executed in order from the top of the machine type list. After that, the procedure proceeds to S51.

In S51, whether or not it is a connectable machine type is determined. Whether or not it is a connectable machine type is determined depending on whether or not an item acquired from the machine type list (not shown) of the RAM 22 in S51 is a machine type name. If it is determined that it is a connectable machine type (S51: YES), the procedure proceeds to S53 and if it is determined that it is not a connectable machine type or it is a connected printer (S51: NO), the procedure proceeds to S52.

In S52, a printer is displayed in the printer display area 120 of the file management screen 110 and an item of a connected printer acquired in S50 is displayed in gray-out (displayed simply). After that, the procedure proceeds to S56.

In S53, whether or not a file being dragged with the mouse 7 can be registered as a connectable machine type is determined. This determination is carried out according to a machine type included in the file because the file includes a machine type name capable of printing the file if the file is based on a layout template. If the file is a text file or an image file, a correspondence relation to each file is stored in the HDD 25 for each machine type and thus, the determination is carried out with reference thereto. If it is determined that a file being dragged can be registered in the connectable machine type (S53: YES), the procedure proceeds to S54 and if it is determined that that file cannot be registered (S53: NO), the procedure proceeds to S55.

In S54, the printer is displayed in the printer display area 120 of the file management screen 110 and an item of the connectable machine type acquired in S50 is displayed in highlight (lit). After that, the procedure proceeds to S56.

In S55, the printer is displayed in the printer display area 120 of the file management screen 110. An item of a connectable machine type acquired in S50 is displayed in gray-out (displayed simply). After that, the procedure proceeds to S56.

In S56, whether or not all machine type names and printer names are checked from the machine type list (not shown) of the RAM 22 is determined. If it is determined that all are checked (S56: YES), the file drag display processing is ended and the procedure proceeds to S31 of the file drag processing shown in FIG. 9. If it is determined that all are not checked (S56: NO), the procedure proceeds to S50, in which the aforementioned processing is repeated.

Return to FIG. 9 for a further description. In S31, when a file being dragged with the mouse 7 is an item of connectable machine type (connectable machine type icon or machine name) located in the printer display area 120 of the file management screen 110, whether or not that file is dropped in the item of the connectable machine type is determined. If it is determined that it is dropped in the connectable machine type item (S31: YES), the procedure proceeds to S31-2 and if it is determined that it is not dropped into the connectable machine type item (S31: NO), the procedure proceeds to S32.

In S32, when a file being dragged with the mouse 7 is dropped into the registered file display area 130 of the file management screen 110, whether or not a file to be transferred to the connectable machine type is displayed in the registered file display area 130 while the connectable machine type item is selected in the printer display area 120 is determined. If the file is dropped into the registered file display area 130 and it is determined that the file to be transferred to the connectable machine type is displayed in the registered file display area 130 (S32: YES), the procedure proceeds to S32-2. If the file is not dropped into the registered file display area 130 or it is determined that a file stored in the connected printer is displayed in the registered file display area 130 (S32: NO) even if the file is dropped into the registered file display area 130, the procedure proceeds to S33.

In S33, whether or not a file being dragged with the mouse 7 is dropped into an item of a connectable machine type in the printer display area 120 of the file management screen 110 and whether it is dropped in other area than the registered file display area 130 which is selecting an item of the connectable machine type in the printer display area 120 is determined. When it is determined that the file is dropped into other area, that is, anywhere (S33: YES), a connectable machine type or connected printer in the printer display area 120 indicated in gray-out in the aforementioned file drag display processing (see FIG. 10) is returned to highlight indication and the file drag processing is ended and then, the procedure proceeds to S2 of the main processing shown in FIG. 7. If it is determined that a file being dragged with the mouse 7 is not dropped into the item of the connectable machine type in the registered file display area 130 of the file management screen 110 nor other area than the registered file display area 130 which is selecting an item of a connectable machine type in the printer display area 120, that is, the file is not dropped in anywhere (S33: NO), the procedure proceeds to S31, in which the aforementioned processing is repeated.

When a file is dragged and dropped to the item of the connectable machine type in the printer display area 120, the dropped file and the connectable machine type in which the file is dropped are related to each other temporarily (S31-2). When the file is dropped into the registered file display area 130 and a file to be transferred to the connectable machine type is displayed in the registered file display area 130, the dropped file and the connectable machine type whose registered file is displayed in the registered file display area 130 are related to each other temporarily (S32-2). In S34, whether or not the related file and connectable machine type can cope with each other is determined.

Because if the file is a file based on a layout template, that file contains a machine type name capable of printing the file, this determination is carried out according to that machine type. If the file is a text file or an image file, association to each file is stored in the HDD 25 for each machine type and is referred upon the determination. If it is determined that the related file and a connectable machine type can cope with each other (S34: YES), the procedure proceeds to S35 and if it is determined that the related file and the connectable machine type cannot cope with each other (S34: NO), an alarm is dispatched to the operator (S34-2) and the procedure proceeds to S36.

In S35, the dropped file is stored in the file registration list memory area 29 of the HDD 25 and registered in a file registration list of the connectable machine type in which the file is dropped. After that, a connectable machine type or connected printer item in the printer display area 120 displayed in gray-out by the above-described file drag display processing (see FIG. 10) is returned to highlight indication and the file drag processing is ended and then the procedure proceeds to S2 of the main processing shown in FIG. 7.

In S35, the quantity of files which can be related to the function keys of the printer 1 is determined for each file type and each model of the printer 1. However, the file may be registered as a file which is not related to any function key. In this case, the quantity of files is substantially not limited.

If a file is dropped in the item of a connectable machine type by the file drag operation and the quantity of files determined depending on the type of the file and model of the printer 1 is not satisfied, a dropped file is registered in a record in which the "Transfer Name" item 131 of the registered file display area 130 is blank. At that time, a number not used in the "Key Assign" item 133 is allocated to the "Key Assign" item 133 of that record at random. If a file is dropped into the item of the connectable machine type and the quantity of files determined for each file type and each model of the printer 1 is satisfied, the dropped file is registered in a record in which the "Transfer Name" item 131 of the registered file display area 130 is blank. However, the "Key Assign" item 133 of that record is kept blank. In this case, it may be constructed that a registered file whose "Type" item 132 coincides is replaced with the dropped file.

If a file is dropped into the registered file display area 130 by the file drag operation and the quantity of files determined for each file type and each model of the printer 1 is not satisfied, the dropped file is registered in a record in which the "Transfer Name" item 131 of the registered file display area 130 is blank. If a file is dropped into a record in which the "Transfer Name" item 131 is blank, the dropped file is registered in that record. In any case, a number not used in the "Key Assign" item 133 is allocated to the "Key Assign" item 133 of a record in which the file is to be registered at random.

If a file is dropped into the registered file display area 130 and the quantity of files determined for each file type and each model of the printer 1 is also satisfied, the dropped file is registered in a record in which the "Transfer Name" item 131 of the registered file display area 130 is blank. However, the "Key Assign" item 133 of that record is kept blank. In the meantime, it may be constructed that a registered file whose "Type" item 132 coincides is replaced with the dropped file. In this case, when the "Type" item 132 of the record in which the file is dropped coincides with the file "Type", the dropped file is registered in that record instead.

In S36, a connectable machine type in which the dropped file can be registered is extracted from the machine type list (not shown) of the RAM 22. If the file is a layout template file, a machine type capable of printing the file is provided in the file and thus, it is referred. If the file is a text file or an image file, association of each model and each file is stored in the HDD 25 and is referred.

After that, the procedure proceeds to S37.

In S37, the dialogue screen 200 as shown in FIG. 6 is displayed on the monitor 5 through the display control portion 31. At that time, a machine type extracted in S36 is displayed as a choice in the machine type list display area 210 of the dialogue screen 200. Whether or not the file is registered in the extracted printer 1 is verified by the operator. After that, the procedure proceeds to S38.

In S38, various operation to the dialogue screen 200 from the operator are accepted. The dialogue screen 200 allows the check box in front of each choice displayed in the machine type list display area 210 to be checked by clicking or the OK button 211 to be clicked. When the dialogue screen 200 is closed by clicking the OK button 211 of the dialogue screen 200, the procedure proceeds to S39.

In S39, whether or not any connectable machine type was selected in S38 is determined. In S38, whether or not with any choice in the machine type list display area 210 of the dialogue screen 200 checked, the procedure has proceeded to S39 because the OK button 211 is clicked is determined. If it is determined that a selectable machine type is selected (S39: YES), the procedure proceeds to S40 and if it is determined that no selectable machine type is selected (S39: NO), the connectable machine type or connected printer item indicated with gray-out display by the aforementioned file drag display processing (see FIG. 10) in the printer display area 120 is returned to highlight indication and then, the file drag processing is ended and the procedure proceeds to main processing S2 shown in FIG. 7.

In S40, the dropped file is stored in the file registration list memory area 29 of the HDD 25 and registered in a file registration list of a connectable machine type selected in S38. After that, a connectable machine type or a connected printer item in the printer display area 120 displayed in gray-out by the file drag display processing (see FIG. 10) is returned to highlight indication and the file drag processing is ended and the procedure proceeds to S2 of the main processing shown in FIG. 7.

Return to FIG. 7 for a further description. In S5, whether or not a connectable machine type icon or connected printer icon displayed in the printer display area 120 of the file management screen 110 is being dragged is determined. If it is determined that any of those icons is being dragged (S5: YES), the procedure proceeds to S6 and if it is determined that no icon is being dragged (S5: NO), the procedure proceeds to S7.

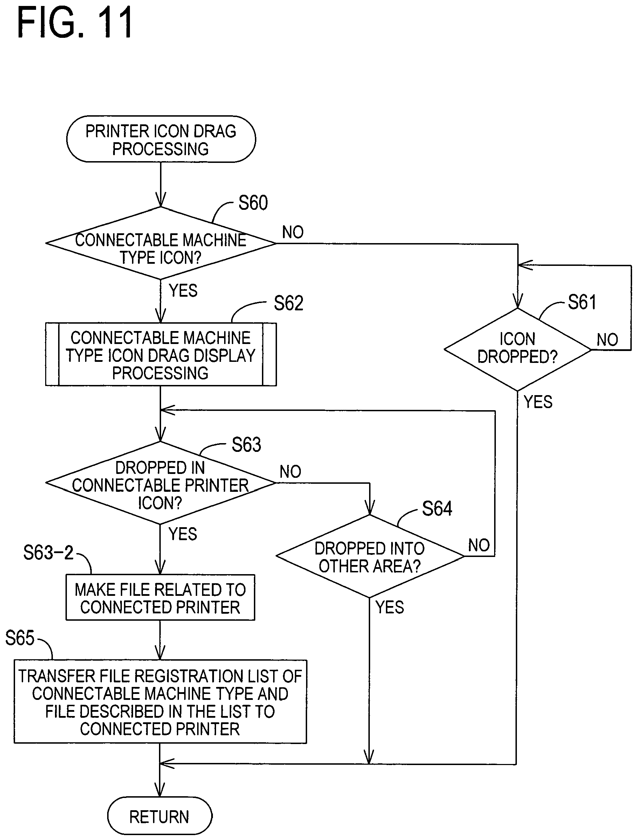

The printer icon drag processing is carried out in S6. Description of the main processing with reference to FIG. 7 is interrupted here and the printer icon drag processing will be described with reference to FIG. 11.

In S60, whether or not the dragged icon is a connectable machine type icon is determined. If it is determined that the dragged icon is the connectable machine type icon (S60: YES), the procedure proceeds to S62 and if it is determined that the dragged icon is not the connectable machine type icon, that is, it is a connected printer icon (S60: NO), all the connectable machine type items and connected printer items are displayed in gray-out in the printer display area 120 of the file management screen 110. After that, the procedure proceeds to S61.

In S61, if it is determined that a connected printer icon dragged with the mouse 7 is dropped (S61: YES), the connectable machine type and connected printer item in the printer display area 120 displayed in gray-out are returned to highlight indication and the printer icon drag processing is ended and then, the procedure proceeds to S2 of the main processing shown in FIG. 7. If in S61, it is determined that the connected printer icon dragged with the mouse 7 is not dropped (S61: NO), the procedure is returned to S61, in which the aforementioned processing is repeated.

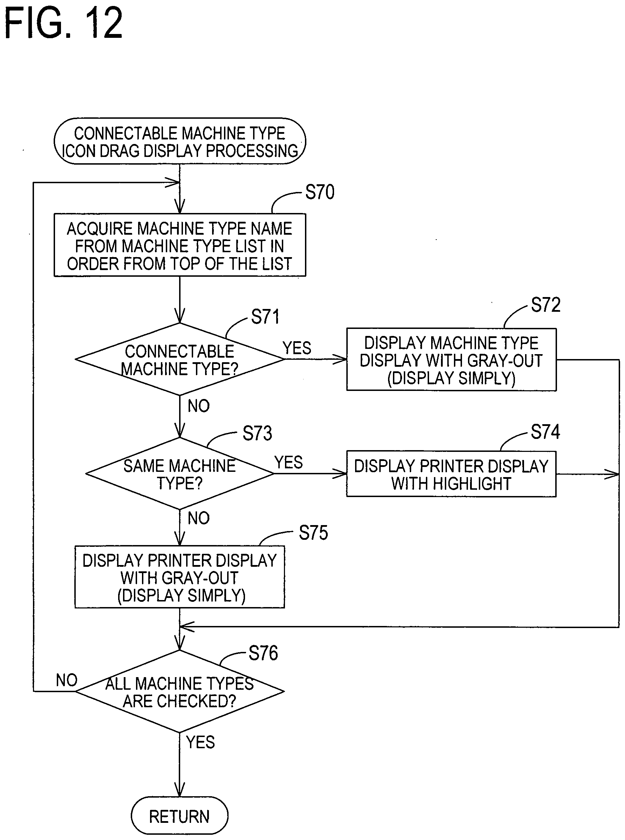

In S62, connectable machine type icon drag display processing is carried out. Description of the printer icon drag processing with reference to FIG. 11 is interrupted and the connectable machine type icon drag display processing will be described with reference to FIG. 12.

In S70, a machine type name or a printer name is acquired one by one at a time from a machine type list (not shown) of the RAM 22. The acquisition at this time is executed in order from the top of the machine type list. After that, the procedure proceeds to S71.

In S71, whether or not it is a connectable machine type is determined. Whether or not it is a connectable machine type is determined depending on whether or not an item acquired from the machine type list (not shown) of the RAM 22 in S71 is a machine type name. If it is determined that it is a connectable machine type (S71: YES), the procedure proceeds to S72 and if it is determined that it is not a connectable machine type or it is a connected printer (S71: NO), the procedure proceeds to S73.

In S72, a printer is displayed in the printer display area 120 of the file management screen 110 and the item of a connectable machine type acquired in S70 is displayed in gray-out (displayed simply). After that, the procedure proceeds to S76.

In S73, whether or not the machine type of the printer 1 indicated by the connectable machine type icon being dragged with the mouse 7 is of the same type as the connected printer acquired in S70 is determined. Because in this embodiment, the printer name of the connected printer is the same as the machine type name of the printer 1 or the machine type name of the printer 1 with a predetermined number added, whether or not the machine type of the printer 1 indicated with the connectable machine type icon being dragged is of the same type as the machine type of the connected printer acquired in S70 can be determined. If it is determined that the machine type of the printer 1 indicated by the connectable machine type icon being dragged is of the same type as the machine type of the connected printer acquired in S70 (S73: YES), the procedure proceeds to S74 and if it is determined that the machine type of the printer 1 indicated by the connectable machine type icon being dragged is not of the same type as the machine type of the connected printer acquired in S70 (S73: NO), the procedure proceeds to S75.

In S74, the printer is displayed in the printer display area 120 of the file management screen 110 and an item of the connected printer acquired in S70 is displayed in highlight (lit). After that, the procedure proceeds to S76.

In S75, the printer is displayed in the printer display area 120 of the file management screen 110. An item of a connected printer acquired in S70 is displayed in gray-out (displayed simply). After that, the procedure proceeds to S76.

In S76, whether or not all machine type names and printer names are checked from the machine type list (not shown) of the RAM 22 is determined. If it is determined that all are checked (S76: YES), the connectable machine type icon drag display processing is ended and the procedure proceeds to S63 of the printer icon drag processing shown in FIG. 11. If it is determined that all are not checked (S76: NO), the procedure proceeds to S70, in which the aforementioned processing is repeated.

Return to FIG. 11 for a further description. In S63, when a connectable machine type icon being dragged with the mouse 7 is a connected printer item (connected printer icon or printer name) located in the printer display area 120 of the file management screen 110, whether or not that icon is dropped in the item of a connected printer displayed in highlight is determined. If it is determined that the icon is dropped into the connected printer displayed in highlight (S63: YES), the procedure proceeds to S63-2 and if it is determined that the icon is not dropped into the item of the connected printer displayed in highlight (S63: NO), the procedure proceeds to S64.

When a connectable machine type icon is dragged and dropped to the item of the connected printer in the printer display area 120, the connected machine type indicated by the dropped connectable machine type icon and the connected printer in which the connectable machine type icon is dropped are temporarily related to each other (S63-2). In S63, whether or not the related connectable machine type and the connected printer can cope with each other is determined.

In S65, a file registration list of connectable machine type indicated by a connectable machine type icon, stored in the file registration list memory area 29 of the HDD 25 and a file described in the file registration list are transferred to the a connected printer in which the connectable machine type icon is dropped through the USB cable 3. After that, the connectable machine type or connected printer item in the printer display area 120 displayed in gray-out by the aforementioned connectable machine type icon drag display processing (see FIG. 12) is returned to highlight indication and the printer icon drag processing is ended and then the procedure proceeds to S2 of the main processing shown in FIG. 7.

In S64, whether or not a connectable machine type icon being dragged with the mouse 7 is dropped into other area than the connected printer item displayed in highlight in the printer display area 120 of the file management screen 110 is determined. If it is determined that the file is dropped into the other area, that is, anywhere (S64: YES), the connectable machine type or connected printer item in the printer display area 120 displayed in gray-out by the aforementioned connectable machine type icon drag display processing (see FIG. 12) is returned to highlight indication and the printer icon drag processing is ended and then, the procedure proceeds to S2 of the main processing shown in FIG. 7. If it is determined that the connectable machine type icon being dragged with the mouse 7 is not dropped into other area than the connected printer item displayed in highlight in the printer display area 120 of the file management screen 110, that is, the file is not dropped (S64: NO), the procedure is returned to S63 in which the aforementioned processing is repeated.

Return to FIG. 7 for a further description. In S7, whether or not a registered file displayed in the "Transfer Name" item 131 of the registered file display area 130 of the file management screen 110 is being dragged with the mouse 7 is determined. If it is determined that that file is being dragged (S7: YES), the procedure proceeds to S8 and if it is determined that the file is not being dragged (S7: NO), the procedure proceeds to S9.

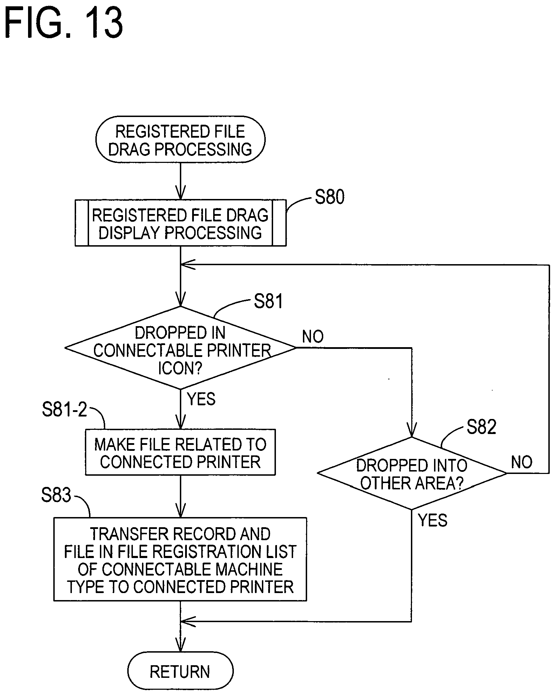

In S8, file drag processing is carried out. Here, description of the main processing with reference to FIG. 7 is interrupted and the registered file drag processing will be described with reference to FIG. 13.

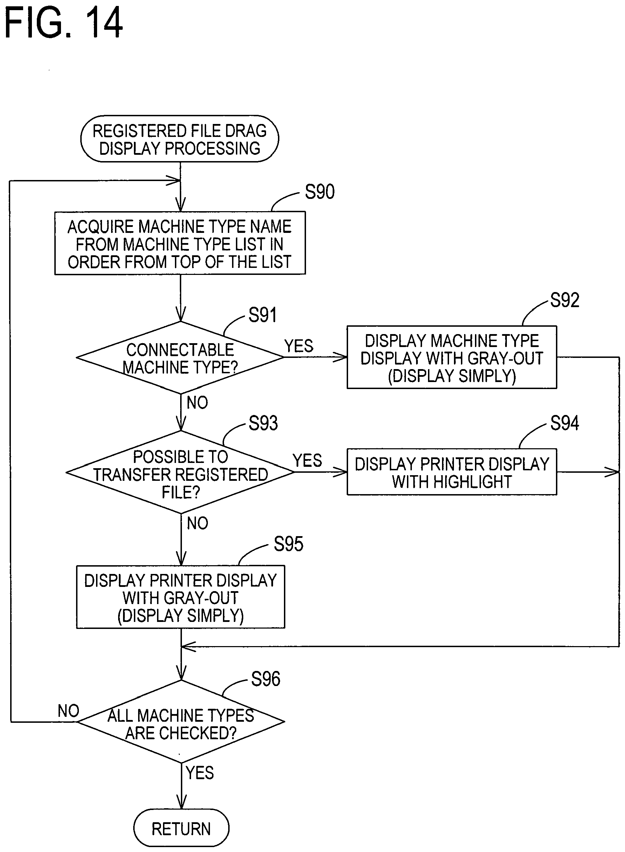

In S80, the registered file drag display processing is carried out. Here, description of the registered file drag processing with reference to FIG.13 is interrupted and the registered file drag display processing will be described with reference to FIG. 14.

In S90, a machine type name or a printer name is acquired one by one at a time from the machine type list (not shown) of the RAM 22. The acquisition at this time is executed in order from the top of the machine type list. After that, the procedure proceeds to S91.

In S91, whether or not it is a connectable machine type is determined. Whether or not it is a connectable machine type is determined depending on whether or not an item acquired from the machine type list (not shown) of the RAM 22 in S91 is a machine type name. If it is determined that it is a connectable machine type (S91: YES), the procedure proceeds to S92 and if it is determined that it is not a connectable machine type or it is a connected printer (S91: NO), the procedure proceeds to S93.

In S92, a printer is displayed in the printer display area 120 of the file management screen 110 and an item of a connectable machine type acquired in S90 is displayed in gray-out (displayed simply). After that, the procedure proceeds to S96.

In S93, whether or not a registered file being dragged with the mouse 7 can be transferred is determined. This determination is carried out according to a machine type included in the file because the file includes a machine type capable of printing the file if the file is based on a layout template. If the file is a text file or an image file, an associated relation to each file is stored in the HDD 25 for each machine type and thus, the determination is carried out with reference thereto. If it is determined that a registered file being dragged can be transferred (S93: YES), the procedure proceeds to S94 and if it is determined that that file being dragged cannot be transferred (S93: NO), the procedure proceeds to S95.

In S94, the printer is displayed in the printer display area 120 of the file management screen 110 and an item of the connected printer acquired in S90 is displayed in highlight (lit). After that, the procedure proceeds to S96.

In S95, the printer is displayed in the printer display area 120 of the file management screen 110 and the item of the connected printer acquired in S90 is displayed in gray-out (displayed simply). After that, the procedure proceeds to S96.

In S96, whether or not all the machine types and printer names are checked from the machine type list (not shown) of the RAM 22 is determined. If it is determined that all of them were checked (S96: YES), the registration file drag display processing is ended and then the procedure proceeds to the registered file drag processing S81 shown in FIG. 13. If it is determined that all of them have not been checked (S96: NO), the procedure proceeds to S90, in which the aforementioned processing is repeated.

Return to FIG. 13 for a further description. In S81, when a registered file being dragged with the mouse 7 is an item of a connected printer (connected printer icon or printer name) in the printer display area 120 of the file management screen 110, whether or not the file was dropped in the item of a connected printer displayed in highlight. If it is determined that the file was dropped in the item of the connected printer displayed in highlight (S81: YES), the procedure proceeds to S81-2 and if it is determined that no file was dropped in the item of the connected printer displayed in highlight (S81: NO), the procedure proceeds to S82.

If the registered file is dragged and dropped to the item of the connected printer in the printer display area 120, the dropped registered file and the connected printer in which the registered file is dropped are related to each other temporarily (S81-2). In S81, whether or not the related registered file and connected printer can cope with each other is determined.

In S83, a corresponding record in a file registration list of a connectable machine type indicated by the connectable machine type icon stored in the file registration list memory area 29 of the HDD 25 and a file described in that record are transferred to a connected printer in which the registered file was dropped through the USB cable 3. After that, the connectable machine type in the printer display area 120 displayed in gray-out by the registered file drag display processing (see FIG. 14) or an item of the connected printer is returned to highlight indication and the registered file drag processing is ended and then the procedure proceeds to S2 of the main processing shown in FIG. 7.

In S82, when a registered file being dragged with the mouse 7 is in the printer display area 120 of the file management screen 110, whether or not that file was dropped in other area than the item of the connected printer displayed in highlight is determined. If it is determined that the file was dropped in other area, that is, anywhere (S82: YES), the connectable machine type in the printer display area 120 displayed in gray-out by the registered file drag display processing (see FIG. 14) or the item of the connected printer is returned to highlight indication and the registered file drag processing is ended and then, the procedure proceeds to S2 of the main processing shown in FIG. 7. If when a registered file being dragged with the mouse 7 is located in the printer display area 120 of the file management screen 110, that file was not dropped in other area than the item of the connected printer or that file was not dropped (S82: NO), the procedure proceeds to S81, in which the aforementioned processing is repeated.

Return to FIG. 7 for a further description. In S9, whether or not an item of a connectable machine type or connected printer displayed in the printer display area 120 of the file management screen 110 was clicked with the mouse 7 is determined. If it is determined that it was clicked (S9: YES), the procedure proceeds to S10 and if it is determined that it was not clicked (S9: NO), the procedure proceeds to S11.

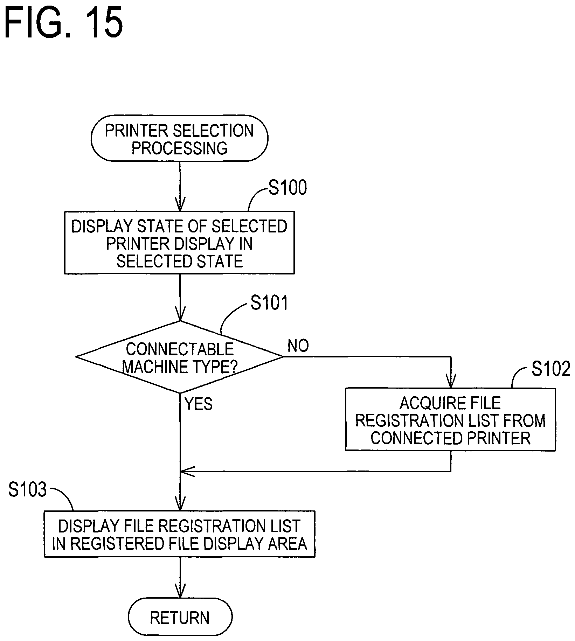

In S10, the printer selection processing is carried out. Description of the main processing with reference to FIG. 7 is interrupted here and the printer selection processing will be described with reference to FIG. 15.

In S100, of the items of the connectable machine type or connected printer displayed in the printer display area 120 of the file management screen 110, an item determined to be clicked in S9 of FIG. 7 is displayed in reversed state and selected. Any item not clicked is returned to normal indication. After that, the procedure proceeds to S101.

In S101, whether or not a clicked item is an item of a connectable machine type is determined. If it is determined that it is the item of the connectable machine type (S101: YES), a file registration list of a machine type corresponding to the clicked connectable machine type is read out from the file registration list memory area 29 and the procedure proceeds to S103 and if it is determined that it is not an item of connectable machine type, that is, it is an item of the connected printer (S101: NO), the procedure proceeds to S102.

In S103 after S101, a file registration list read out from the file registration list memory area 29 of the HDD 25 is displayed in the registered file display area 130 of the file management screen 110.

In S102, a file registration list is acquired from a connected printer selected by clicking. This action is carried out when a file registration list read request command is transmitted from the personal computer 2 to the printer 1 and correspondingly, a file registration list is send back from the printer 1. After that, the procedure proceeds to S103.

In S103 after S102, a file registration list read out from the printer 1 is displayed in the registered file display area 130 of the file management screen 110.

After S103 is ended, the printer selection processing is ended and the procedure proceeds to S2 of the main processing shown in FIG. 7.

Return to FIG. 7 for a further description. In S11, other processing is carried out. The other processing includes changing of the key number displayed in the "Key Assign" item 133 of the registered file display area 130 of the file management screen 110 and selecting of a plurality of files in the registered file display area 130. When with a plurality of files selected in the registered file display area 130, the plurality of files are dragged and dropped to an item of a connected printer in the printer display area 120, the plurality of files are transmitted to the connected printer. After that, the procedure proceeds to S2, in which the aforementioned processing is repeated.

When setting for transfer of a file to the printer 1, the transfer of the file can be set through a screen. Because the transfer of the file can be carried out by dragging and dropping the file from the file display area 15 of Explorer with the mouse 7, the number of operations can be reduced. Further, because the CPU 20 determines whether or not the printer 1 and the file can cope with each other, files which can turn to a candidate of file to be transferred to the printer 1 do not need to be classified and divided to various folders for management.

A file registered to be transferred in the registered file display area 130 of the file management screen 110 can be verified.

The transfer of the file can be set by dragging and dropping the file from the file display area 15 of Explorer to the registered file display area 130 of the file management screen 110, thereby improving operability.

Because the printer 1 which is currently connected to the personal computer 2 can be verified in the printer display area 120 of the file management screen 110, the printer 1 to which the file can be transferred currently can be verified.

By dragging and dropping a connectable machine type icon displayed in the printer display area 120 of the file management screen 110 to an item of the connected printer displayed in the printer display area 120, a registered file which is registered as a connectable machine type can be transferred immediately to the connected printer in which the connectable machine type icon was dropped.

Further, by dragging and dropping a registered file displayed in the registered file display area 130 to an item of the connected printer in the printer display area 120, the registered file can be transferred to the connected printer immediately.

If it is determined that the related printer 1 and file cannot cope with each other, an alarm can be dispatched to the operator so that the operator can know that an operation is invalid.

A connectable machine type not extracted by the CPU 20 as a connectable machine type capable of printing a file when the file is being dragged from the file display area 15 of Explorer with the mouse 7 is displayed in gray-out. Consequently, invalid operations are reduced and operability is improved.

If it is determined that the related printer 1 and file cannot cope with each other, the operator is urged to confirm whether or not a file is to be registered in the printer 1 extracted by the CPU 20. Consequently, the operator is prevented from repeating the invalid operation because the printer 1 which can be valid to an operation is extracted when an invalid operation is done, thereby improving the operability.

The present disclosure is not restricted to this embodiment but needless to say, may be modified and improved within a range not departing from the spirit of the disclosure.

A track ball may be used instead of the mouse 7. For input to the monitor 5 composed of a touch panel, a pen or the finger may be used.

In this embodiment, in S52 of the file drag display processing of FIG. 10, the item of connected printer is displayed in gray-out (displayed simply) and in S54, the item of the connectable machine type is displayed in highlight (lit) and in S55, the item of the connectable machine type is displayed in gray-out (displayed simply). Instead, in S54, the item of the connectable machine type may be displayed in highlight (lit). In S52, the item of connected printer may be displayed in highlight (lit) and in S54, the item of connectable machine type may be blinked and in S55, the item of connectable machine type may be display in highlight (lit).

In this embodiment, in S72 of the connectable machine type icon drag display processing of FIG. 12, the item of the connectable machine type is displayed in gray-out (displayed simply), and in S74, the item of connected printer is displayed in highlight (lit) and in S75, the item of connected printer is displayed in gray-out (displayed simply). Instead, the item of the connected printer may be blinked in S74. In S72, the item of connectable machine type may be displayed in highlight (lit), and in S74, the item of connected printer may be blinked and in S75, the item of connected printer may be displayed in highlight (lit).

In this embodiment, in S92 of the registered file drag display processing of FIG. 14, the item of connectable machine type is displayed in gray-out (displayed simply), and in S94, the item of connected printer is displayed in highlight (lit) and in S95, the item of connected printer is displayed in gray-out (displayed simply). Instead, in S94, the item of connected printer may be blinked. In S92, the item of the connectable machine item may be displayed in highlight (lit), and in S94, the item of connected printer may be blinked and in S95, the item of connected printer may be displayed in highlight (lit).

Consequently, a connectable machine type extracted by the CPU 20 as a connectable machine type capable of printing the file is blinked while the file is being dragged from the file display area 15 of Explorer with the mouse 7, thereby reducing invalid operation and improving the operability.

Although in this embodiment, the item of the connectable machine type displayed in the printer display area 120 of the file management screen 110 corresponds to the machine type of the printer 1, printers to be connected are set for different items even if they are of the same machine type and different combinations of files may be registered as a file to be transferred to each printer. Although in this case, the item of the connectable machine type and the item of the connected printer are classified in different items in this embodiment, it may be constructed that the same printer 1 is displayed in a single item. At this time, the items of the printer 1 connected to the personal computer 2 is desired to be displayed identifiably in a different icon shape or color.

Although prohibited in this embodiment, it may be constructed that the file is dragged and dropped with the mouse 7 from the file display area 15 of Explorer to a connected printer item displayed in the printer display area 120 of the file management screen 110. In this case, the file is transmitted directly to the connected printer 1. In this case, the transmitted file may be registered in the file registration list of the connectable machine type corresponding to the connected printer.

Although prohibited in this embodiment, if the item of the connected printer is selected in the printer display area 120 of the file management screen 110 and the state of the file stored in the connected printer is displayed in the registered file display area 130, the file may be dragged and dropped from the file display area 15 of Explorer to the registered file display area 130. In this case, the file is transmitted directly to the connected printer 1 in a selected state. In this case, the transmitted file may be registered in the file registration list of a connectable machine type corresponding to the machine type of the connected printer in a selected state.

Although prohibited in this embodiment, the icon of a connectable machine type may be dragged and dropped with the mouse 7 up to the item of a different connectable machine type in the printer display area 120 of the file management screen 110. In this case, the file registered to be transferred in a connected machine type to be dragged is registered as a file to be transferred to another connectable machine type.

Although prohibited in this embodiment, when an item of connectable machine type is selected in the printer display area 120 of the file management screen 110 and a file registration list of the connectable machine type is displayed in the registered file display area 130, a file indicated in the "Transfer Name" item 131 in the file registration list displayed in the registered file display area 130 may be dragged and dropped to an item of other connectable machine type than a selected connectable machine type in the printer display area 120 of the file management screen 110. In this case, the file dragged and dropped in the other connectable machine type is registered as a file to be transferred.

Although prohibited in this embodiment, when an item of connectable machine type is selected in the printer display area 120 of the file management screen 110 and a file registration list of the connectable machine type is displayed in the registered file display area 130, the item of other connectable machine type than a selected connectable machine type in the printer display area 120 of the file management screen 110 may be dragged and dropped to the registered file display area 130. In that case, a file to be transferred to the other connectable machine type is registered as a file to be transferred to the selected connectable machine type.

Although in this embodiment, the file display area 15 of Explorer and the file management screen 110 of the file management application 100 are of different screen, it is permissible to use the file management function of the file management application 100 as a function of Explorer and add an item of "Transfer Manager" of the file management screen 110 as a folder displayed in a folder display area on the left side of Explorer so that the items of the connectable machine types and item of the connected printer are displayed below that item.

## Claims

1. A file management apparatus comprising:
a display unit (5) which is configured to display various kinds of information;
a pointing device (7); and
a communication unit (30) which is configured to communicate with a connected printer (1), wherein the file management apparatus uses the Windows (registered trademark) operating system (OS), which has a file system with the product name Explorer, wherein the file system is of tree structure and the Explorer can list files existing in a folder on a file display area (15) which is configured to display a file in the display unit (5); wherein the file management apparatus further includes:
the file display area (15) which is configured to display a file in the display unit (5);
a printer display area (120) which is configured to display printer information concerning the printer (1) to be connected to the file management apparatus (2) in the display unit (5); and
a registered file display area (130) which is configured to display a file registered so as to be transferred to the printer (1) on the display unit (5),
**characterized in that**
connected printer information concerning the connected printer (1) connected to the file management apparatus (2) is displayed in the printer display area (120); and
the file management apparatus further comprises:
a relating unit (20) which is configured to relate the file to the printer (1) of the printer information when the file displayed in the file display area (15) is dragged and dropped to the printer information displayed in the printer display area (120) by the pointing device (7);
a determining unit (20) which is configured to determine whether or not the related printer (1) is of machine type capable of printing the file; and
a memory unit (25) which is configured to store a combination between the related printer (1) and the file when it is determined that the printer (1) related by the relating unit (20) is of machine type capable of printing the file; and
a registration unit (20) which is configured to register the file so as to be transferred to the printer (1) according to a combination stored in the memory unit (25);
the file management apparatus further comprises the features a) and b):
a) the relating unit (20) is configured to relate a file registered to be transferred to the printer (1) of the printer information to the connected printer (1) of the connected printer information when the printer information displayed in the printer display area (120) is dragged and dropped to the connected printer information displayed in the printer display area (120) with the pointing device (7);
b) a printer selecting unit (20) which is configured to select printer information whose registered file is displayed in the registered file display area (130) from a plurality of the printer information displayed in the printer display area (120) when the plurality of the printers (1) are connected to the file management apparatus (2); and the relating unit (20) is configured to relate, when the file displayed in the registered file display area (130) associated with the printer information selected by the printer selecting unit (20) is dragged and dropped to the connected printer information with the pointing device (7), the file to the connected printer (1) of the connected printer information;
in any one of a) and b), the communication unit (30) is configured to transfer the file to the connected printer (1) when it is determined that the connected printer (1) related by the relating unit (20) is of machine type capable of printing the file.

2. The file management apparatus according to claim 1,
wherein the relating unit (20), when the file displayed in the file display area (15) is dragged and dropped to the registered file display area (130) by the pointing device (7), is configured to relate the file to the printer (1) of which printer information is displayed in the registered file display area (130),
wherein the registration unit (20), when it is determined that the printer (1) related by the relating unit (20) is of machine type capable of printing the file, is configured to register the file so as to be transferred to the printer (1).

3. The file management apparatus according to any of claims 1 to 2, wherein a type of the printer (1) connected to the file management apparatus (2) is displayed in the printer display area (120) identifiably.

4. The file management apparatus according to any of claims 1 to 3, further comprising an alarm unit (20) which is configured to dispatch an alarm when it is determined that the printer (1) related by the relating unit (20) is of machine type not capable of printing the file.

5. The file management apparatus according to any of claims 1 to 4, further comprising:
an extracting unit (20) which is configured to extract printer information concerning the printer of machine type capable of printing a predetermined file from a plurality of the printer information displayed in the printer display area (120) when the plurality of the printers (1) are connected to the file management apparatus (2); and
a blinking control unit (20) which is configured to blink the printer informtion extracted by the extracting unit (20) while the file is being dragged with the pointing device (7).

6. The file management apparatus according to any of claims 1 to 5, further comprising:
an extracting unit (20) which is configured to extract printer information concerning the printer of machine type capable of printing a predetermined file from a plurality of the printer information displayed in the printer display area (120) when the plurality of the printers (1) are connected to the file management apparatus (2); and
a gray-out display control unit (20) which configured to display the printer information not extracted by the extracting device (20) in gray-out while the file is being dragged with the pointing device (7).

7. The file management apparatus according to any of claims 1 to 6, further comprising:
an extracting unit (20) which is configured to extract printer information concerning the printer of machine type capable of printing a predetermined file from a plurality of the printer information displayed in the printer display area (120) when the plurality of the printers (1) are connected to the file management apparatus (2); and
a confirming unit (20) which is configured to urge an operator to confirm whether or not a file is to be registered to be transferred to the printer (1) of the printer information extracted by the extracting unit (20), wherein the confirming unit (20) urges the operator to confirm whether or not the file is to be registered in the printer (1) of the printer information extracted by the extracting unit (20) when it is determined that the printer (1) related by the relating unit (20) is not of machine type capable of printing the file.

8. A computer program product that is used and executed by a file management apparatus (2), the file management apparatus (2) uses the Windows (registered trademark) operating system (OS), which has a file system with the product name Explorer, wherein the file system is of tree structure and the Explorer can list files existing in a folder on a file display area (15) which displays a file in a display unit (5), the file management apparatus (2) comprising
a recording medium that can be read by the file management apparatus (2); and
a computer program stored in the recording medium that can be read by the file management apparatus (2), wherein the computer program comprises:
a printer information display step (S21) of displaying printer information concerning a printer (1) to be connected to the file management apparatus (2) on a printer display area (120); and
a registered file display step (S103) of displaying a file registered so as to be transferred to the printer (1) in a registered file display area (130),
**characterized in that**
connected printer information concerning the connected printer (1) connected to the file management apparatus (2) is displayed in the printer display area (120);
the computer program product further comprises:
a first relating step (S31-2) of relating a file to the printer (1) of the printer information when the file displayed in a file display area (15) is dragged and dropped to the printer information displayed in the printer display area (120) by a pointing device (7);
a determination step (S34) of determining whether or not the related printer (1) is of machine type capable of printing the file; and
a registration step (S35) of registering the file so as to be transferred to the printer (1) according to a combination of the related printer (1) and the file when it is determined that the printer (1) related at the determination step (S34) is of machine type capable of printing the file;
the computer program product further comprises the features a) and b):
a) a third relating step (S63-2) of relating a file registered to be transferred to the printer (1) of the printer information to the connected printer (1) of the connected printer information when the printer information displayed in the printer display area (120) is dragged and dropped to the connected printer information displayed in the printer display area (120) with the pointing device (7);
b) a printer selecting step (S38) of selecting printer information whose registered file is displayed in the registered file display area (130) from a plurality of the printer information displayed in the printer display area (120) when the plurality of the printers (1) are connected to the file management apparatus (2);
when the file displayed in the registered file display area (130) associated with the printer information selected by the printer selecting unit (20) is dragged and dropped to the connected printer information with the pointing device (7), there is a fourth relating step (S81-2) of relating the file to the connected printer (1) of the connected printer information; and
in any one of a) to b), there is a transfer step of transferring the file to the connected printer (1) when it is determined that the connected printer (1) related at the relating step is of machine type capable of printing the file.

9. The computer program product according to claim 8, wherein the computer program further comprises:
when the file displayed in the file display area (15) is dragged and dropped to the registered file display area (130) by the pointing device (7), there is a second relating step (S32-2) of relating a file to the printer (1) of which printer information is displayed in the registered file display area (130), and
when it is determined that the printer (1) related at the second relating step (S32-2) is of machine type capable of printing the file, the registration step (S35) registers the file so as to be transferred to the printer (1).

10. The computer program product according to any of claims 8 to 9, wherein a type of the printer (1) connected to the file management apparatus (2) is displayed in the printer display area (120) identifiably.

11. The computer program product according to any of claims 8 to 10, wherein the computer program further comprises an alarm step of dispatching an alarm when it is determined that the printer (1) related at the determination step (S34) is of machine type not capable of printing the file.

12. The computer program product according to any of claims 8 to 11, wherein the computer program further comprises:
an extraction step (S50) of extracting printer information concerning the printer of machine type capable of printing a predetermined file from a plurality of the printer information displayed in the printer display area (120) when the plurality of the printers (1) are connected to the file management apparatus (2); and
a blinking display step (S54) of displaying the printer information extracted at the extraction step (S50) blinking while the file is being dragged with the pointing device (7).

13. The computer program product according to any of claims 8 to 12, wherein the computer program further comprises:
an extraction step (S50) of extracting printer information concerning the printer of machine type capable of printing a predetermined file from a plurality of the printer information displayed in the printer display area (120) when the plurality of the printers (1) are connected to the file management apparatus (2); and
a gray-out display step (S52) of displaying the printer information not extracted at the extraction step (S50) in gray-out while the file is being dragged with the pointing device (7).

14. The computer program product according to any of claims 8 to 13, wherein the computer program further comprises:
an extraction step (S50) of extracting printer information concerning the printer of machine type capable of printing a predetermined file from a plurality of the printer information displayed in the printer display area (120) when the plurality of the printers (1) are connected to the file management apparatus (2); and
a confirmation step (S37) of urging an operator to confirm whether or not a file is to be registered to be transferred to the printer (1) of the printer information extracted at the extraction step (S50), and
the confirmation step (S37) urges the operator to confirm whether or not the file is to be registered in the printer (1) of the printer information extracted at the extraction step (S50) when it is determined that the printer (1) related at the determination step (S34) is not of machine type capable of printing the file.

## Patentansprüche

1. Dateiverwaltungsgerät mit:
einer Anzeigeeinheit (5), die dazu konfiguriert ist, verschiedene Informationsarten anzuzeigen;
einer Zeigervorrichtung (7); und
einer Kommunikationseinheit (30), die dazu konfiguriert ist, mit einem verbundenen Drucker (1) zu kommunizieren, wobei das Dateiverwaltungsgerät das Betriebssystem (OS) WINDOWS (eingetragene Marke) verwendet, das ein Dateisystem mit dem Produktnamen EXPLORER hat, wobei das Dateisystem eine Baumstruktur hat und der EXPLORER Dateien auflisten kann, die in einem Verzeichnis vorhanden sind, und zwar in einem Dateianzeigebereich (15), der dazu konfiguriert ist, eine Datei in der Anzeigeeinheit (5) anzuzeigen; wobei das Dateiverwaltungsgerät des Weiteren Folgendes aufweist:
den Dateianzeigebereich (15), der dazu konfiguriert ist, eine Datei in der Anzeigeeinheit (5) anzuzeigen;
einen Druckeranzeigebereich (120), der dazu konfiguriert ist, Druckerinformationen bezüglich des Druckers (1), der mit dem Dateiverwaltungsgerät (2) zu verbinden ist, in der Anzeigeeinheit (5) anzuzeigen; und
einen Anzeigebereich (13) für eine registrierte Datei, der dazu konfiguriert ist, eine Datei, die für einen Transfer zu dem Drucker (1) registriert ist, an der Anzeigeeinheit (5) anzuzeigen,
**dadurch gekennzeichnet, dass** Informationen von verbundenen Druckern, die sich auf den verbundenen Drucker (1) beziehen, der mit dem Dateiverwaltungsgerät (2) verbunden ist, in dem Druckeranzeigebereich (120) angezeigt werden; und
wobei das Dateiverwaltungsgerät des Weiteren Folgendes aufweist:
eine Verknüpfungseinheit (20), die dazu konfiguriert ist, die Datei mit dem Drucker (1) der Druckerinformationen zu verknüpfen, wenn die in dem Dateianzeigebereich (15) angezeigte Datei mittels Ziehen und Ablegen durch die Zeigervorrichtung (7) zu den Druckerinformationen abgelegt wird, die in dem Druckeranzeigebereich (120) angezeigt werden;
eine Bestimmungseinheit (20), die dazu konfiguriert ist, zu bestimmen, ob der verknüpfte Drucker (1) von einer Maschinenart ist oder nicht, die die Datei drucken kann; und
eine Speichereinheit (25), die dazu konfiguriert ist, eine Kombination zwischen dem verknüpften Drucker (1) und der Datei zu speichern, wenn bestimmt wird, dass der durch die Verknüpfungseinheit (2) verknüpfte Drucker (1) von einer Maschinenart ist, die die Datei drucken kann; und
eine Registriereinheit (20), die dazu konfiguriert ist, die Datei so zu registrieren, dass sie zu dem Drucker (1) transferiert wird, und zwar gemäß einer in der Speichereinheit (25) gespeicherten Kombination;
wobei das Dateiverwaltungsgerät des Weiteren die Merkmale a) und b) aufweist:
a) die Verknüpfungseinheit (20) ist dazu konfiguriert, eine Datei, die so registriert ist, dass sie zu dem Drucker (1) der Druckerinformationen transferiert wird, mit dem verbundenen Drucker (1) der Informationen der verbundenen Drucker zu verknüpfen, wenn die in dem Druckeranzeigebereich (120) angezeigten Druckerinformationen mittels Ziehen und Ablegen durch die Zeigervorrichtung (7) zu den Informationen der verbundenen Drucker abgelegt werden, die in dem Druckeranzeigebereich (120) angezeigt werden;
b) eine Druckerauswahleinheit (20), die dazu konfiguriert ist, Druckerinformationen auszuwählen, deren registrierte Datei in dem Anzeigebereich (130) der registrierten Dateien angezeigt wird, und zwar aus vielen Druckerinformationen, die in dem Druckeranzeigebereich (120) angezeigt werden, wenn die vielen Drucker (1) mit dem Dateiverwaltungsgerät (2) verbunden sind; und die Verknüpfungseinheit (20) ist dazu konfiguriert, wenn die in dem Anzeigebereich (130) der registrierten Dateien angezeigte Datei, die mit den Druckerinformationen verknüpft ist, die durch die Druckerauswahleinheit (20) ausgewählt werden, mittels Ziehen und Ablegen durch die Zeigervorrichtung (7) zu den Informationen der verbundenen Drucker abgelegt wird, die Datei mit dem verbundenen Drucker (1) der Informationen der verbundenen Drucker zu verknüpfen;
wobei bei a) und/oder b) die Kommunikationseinheit (30) dazu konfiguriert ist, die Datei zu dem verbundenen Drucker (1) zu transferieren, wenn bestimmt wird, dass der verbundene Drucker (1), der durch die Verknüpfungseinheit (20) verknüpft wird, von einer Maschinenart ist, die die Datei drucken kann.

2. Dateiverwaltungsgerät gemäß Anspruch 1,
wobei die Verknüpfungseinheit (20) dazu konfiguriert ist, die Datei mit dem Drucker (1) zu verknüpfen, dessen Druckerinformationen in dem Anzeigebereich (130) der registrierten Dateien angezeigt werden, wenn die in dem Dateianzeigebereich (15) angezeigte Datei durch die Zeigervorrichtung (7) mittels Ziehen und Ablegen zu dem Anzeigebereich (130) der registrierten Dateien abgelegt wird,
wobei die Registriereinheit (20) dazu konfiguriert ist, die Datei so zu registrieren, dass sie zu dem Drucker (1) transferiert wird, wenn bestimmt wird, dass der Drucker (1), der durch die Verknüpfungseinheit (20) verknüpft wird, von einer Maschinenart ist, die die Datei drucken kann.

3. Dateiverwaltungsgerät gemäß einem der Ansprüche 1 bis 2, wobei eine Art des Druckers (1), der mit dem Dateiverwaltungsgerät (2) verbunden ist, in dem Druckeranzeigebereich (120) identifizierbar angezeigt wird.

4. Dateiverwaltungsgerät gemäß einem der Ansprüche 1 bis 3, des Weiteren mit einer Alarmeinheit (20), die dazu konfiguriert ist, einen Alarm abzugeben, wenn bestimmt wird, dass der Drucker (1), der durch die Verknüpfungseinheit (20) verknüpft wird, von einer Maschinenart ist, die die Datei nicht drucken kann.

5. Dateiverwaltungsgerät gemäß einem der Ansprüche 1 bis 4, des Weiteren mit:
einer Extrahiereinheit (20), die dazu konfiguriert ist, Druckerinformationen bezüglich des Druckers einer Maschinenart zu extrahieren, die eine vorbestimmte Datei drucken kann, und zwar aus vielen Druckerinformationen, die in dem Druckeranzeigebereich (120) angezeigt werden, wenn die vielen Drucker (1) mit dem Dateiverwaltungsgerät (2) verbunden sind; und
einer Blinksteuereinheit (20), die dazu konfiguriert ist, die Druckerinformationen blinkend anzuzeigen, die durch die Extrahiereinheit (20) extrahiert werden, während die Datei durch die Zeigervorrichtung (7) abgelegt wird.

6. Dateiverwaltungsgerät gemäß einem der Ansprüche 1 bis 5, des Weiteren mit:
einer Extrahiereinheit (20), die dazu konfiguriert ist, Druckerinformationen bezüglich des Druckers einer Maschinenart zu extrahieren, die eine vorbestimmte Datei drucken kann, und zwar aus vielen Druckerinformationen, die in dem Druckeranzeigebereich (120) angezeigt werden, wenn die vielen Drucker (1) mit dem Dateiverwaltungsgerät (2) verbunden sind; und
einer Ausgrauanzeigesteuereinheit (20), die dazu konfiguriert ist, die Druckerinformationen, die durch die Extrahiervorrichtung nicht extrahiert werden, ausgegraut anzuzeigen, während die Datei durch die Zeigervorrichtung (7) abgelegt wird.

7. Dateiverwaltungsgerät gemäß einem der Ansprüche 1 bis 6, des Weiteren mit:
einer Extrahiereinheit (20), die dazu konfiguriert ist, Druckerinformationen bezüglich des Druckers einer Maschinenart zu extrahieren, die eine vorbestimmte Datei drucken kann, und zwar aus vielen Druckerinformationen, die in dem Druckeranzeigebereich (120) angezeigt werden, wenn die vielen Drucker (1) mit dem Dateiverwaltungsgerät (2) verbunden sind; und
einer Bestätigungseinheit (20), die dazu konfiguriert ist, einen Benutzer zum Bestätigen dessen zu zwingen, ob eine Datei zu registrieren ist oder nicht, die zu dem Drucker (1) der Druckerinformationen zu transferieren ist, die durch die Extrahiereinheit (20) extrahiert werden, wobei die Bestätigungseinheit (20) den Benutzer zum Bestätigen dessen zwingt, ob die Datei in dem Drucker (1) der Druckerinformationen zu registrieren ist oder nicht, die durch die Extrahiereinheit (20) extrahiert werden, wenn bestimmt wird, dass der Drucker (1), der durch die Verknüpfungseinheit (20) verknüpft ist, nicht von einer Maschinenart ist, die die Datei drucken kann.

8. Computerprogrammprodukt, das durch ein Dateiverwaltungsgerät (2) verwendet und ausgeführt wird, wobei das Dateiverwaltungsgerät (2) das Betriebssystem (OS) WINDOWS (eingetragene Marke) verwendet, das ein Dateisystem mit dem Produktnamen EXPLORER hat, wobei das Dateisystem eine Baumstruktur hat und der EXPLORER Dateien auflisten kann, die in einem Verzeichnis vorhanden sind, und zwar an einem Dateianzeigebereich (15), der eine Datei in einer Anzeigeeinheit (5) anzeigt, wobei das Dateiverwaltungsgerät (2) Folgendes aufweist:
ein Aufzeichnungsmedium, das durch das Dateiverwaltungsgerät (2) gelesen werden kann; und
ein Computerprogramm, das in dem Aufzeichnungsmedium gespeichert ist, das durch das Dateiverwaltungsgerät (2) gelesen werden kann, wobei das Computerprogramm Folgendes aufweist:
einen Druckerinformationsanzeigeschritt (S21) zum Anzeigen von Druckerinformationen bezüglich eines Druckers (1), der mit dem Dateiverwaltungsgerät (2) zu verbinden ist, an einem Druckeranzeigebereich (120); und
einen Anzeigeschritt (S103) von registrierten Dateien, um eine Datei anzuzeigen, die so registriert ist, dass sie zu dem Drucker (1) zu transferieren ist, und zwar in dem Anzeigebereich (130) der registrierten Dateien,
**dadurch gekennzeichnet, dass**
Informationen von verbundenen Druckern bezüglich den verbundenen Druckern (1), die mit dem Dateiverwaltungsgerät (2) verbunden sind, in dem Druckeranzeigebereich (120) angezeigt werden;
wobei das Computerprogrammprodukt des Weiteren Folgendes aufweist:
einen ersten Verknüpfungsschritt (S31-2) zum Verknüpfen einer Datei mit dem Drucker (1) der Druckerinformationen, wenn die in einem Dateianzeigebereich (15) angezeigte Datei mittels Ziehen und Ablegen durch eine Zeigervorrichtung (7) zu den Druckerinformationen abgelegt wird, die in dem Druckeranzeigebereich (120) angezeigt werden;
einen Bestimmungsschritt (S34), um zu bestimmen, ob der verknüpfte Drucker (1) von einer Maschinenart ist oder nicht, die die Datei drucken kann; und
einen Registrierschritt (S35) zum Registrieren der Datei derart, dass sie zu dem Drucker (1) zu transferieren ist, und zwar gemäß einer Kombination des verknüpften Druckers (1) und der Datei, wenn bestimmt wird, dass der Drucker (1), der bei dem Bestimmungsschritt (S34) verknüpft wird, von einer Maschinenart ist, die die Datei drucken kann;
wobei das Computerprogrammprodukt des Weiteren die Merkmale a) und b) aufweist:
a) einen dritten Verknüpfungsschritt (S63-2) zum Verknüpfen einer Datei, die so registriert ist, dass sie zu dem Drucker (1) der Druckerinformationen zu transferieren ist, mit dem verbundenen Drucker (1) der Informationen der verbundenen Drucker, wenn die in dem Druckeranzeigebereich (120) angezeigten Druckerinformationen mittels Ziehen und Ablegen durch die Zeigervorrichtung (7) zu den Informationen der verbundenen Drucker abgelegt werden, die in dem Druckeranzeigebereich (120) angezeigt werden;
b) einen Druckerauswahlschritt (S38) zum Auswählen von Druckerinformationen, deren verknüpfte Datei in dem Anzeigebereich (130) der registrierten Dateien angezeigt wird, und zwar aus vielen Druckerinformationen, die in dem Druckeranzeigebereich (120) angezeigt werden, wenn die vielen Drucker (1) mit dem Dateiverwaltungsgerät (2) verbunden sind;
wenn die Datei, die in dem Anzeigebereich (130) der registrierten Dateien angezeigt wird, die mit den Druckerinformationen verknüpft ist, die durch die Druckerauswahleinheit (20) ausgewählt werden, mittels Ziehen und Ablegen durch die Zeigervorrichtung (7) zu den Informationen der verbundenen Drucker abgelegt wird, gibt es einen vierten Verknüpfungsschritt (S81-2) zum Verknüpfen der Datei mit dem verbundenen Drucker (1) der Informationen der verbundenen Drucker; und
in a) und/oder b) gibt es einen Transferschritt zum Transferieren der Datei zu dem verbundenen Drucker (1), wenn bestimmt wird, dass der verbundene Drucker (1), der bei dem Verknüpfungsschritt verknüpft wird, von einer Maschinenart ist, die die Datei drucken kann.

9. Computerprogrammprodukt gemäß Anspruch 8, wobei das Computerprogrammprodukt des Weiteren Folgendes aufweist:
wenn die in dem Dateianzeigebereich (15) angezeigte Datei mittels Ziehen und Ablegen durch die Zeigervorrichtung (7) zu dem Anzeigebereich (130) der registrierten Dateien abgelegt wird, gibt es einen zweiten Verknüpfungsschritt (S32-2) zum Verknüpfen einer Datei mit dem Drucker (1), dessen Druckerinformationen in dem Anzeigebereich (130) der registrierten Dateien angezeigt wird, und
wenn bestimmt wird, dass der Drucker (1), der bei dem zweiten Verknüpfungsschritt (S32-2) verknüpft wird, von einer Maschinenart ist, die die Datei drucken kann, registriert der Registrierschritt (S35) die Datei derart, dass sie zu dem Drucker (1) zu transferieren ist.

10. Computerprogrammprodukt gemäß einem der Ansprüche 8 bis 9, wobei eine Art des Druckers (1), der mit dem Dateiverwaltungsgerät (2) verbunden ist, in dem Druckeranzeigebereich (120) identifizierbar angezeigt wird.

11. Computerprogrammprodukt gemäß einem der Ansprüche 8 bis 10, wobei das Computerprogrammprodukt des Weiteren einen Alarmschritt zum Abgeben eines Alarms aufweist, wenn bestimmt wird, dass der Drucker (1), der bei dem Bestimmungsschritt (S34) verknüpft wird, von einer Maschinenart ist, die die Datei nicht drucken kann.

12. Computerprogrammprodukt gemäß einem der Ansprüche 8 bis 11, wobei das Computerprogrammprodukt des Weiteren Folgendes aufweist:
einen Extrahierschritt (S50) zum Extrahieren von Druckerinformationen bezüglich des Druckers der Maschinenart, die eine vorbestimmte Datei drucken kann, und zwar aus vielen Druckerinformationen, die in dem Druckeranzeigebereich (120) angezeigt werden, wenn die vielen Drucker (1) mit dem Dateiverwaltungsgerät (2) verbunden sind; und
einen Blinkanzeigeschritt (S54) zum blinkenden Anzeigen der Druckerinformationen, die bei dem Extrahierschritt (S50) extrahiert werden, wenn die Datei durch die Zeigervorrichtung (7) abgelegt wird.

13. Computerprogrammprodukt gemäß einem der Ansprüche 8 bis 12, wobei das Computerprogrammprodukt des Weiteren Folgendes aufweist:
einen Extrahierschritt (S50) zum Extrahieren von Druckerinformationen bezüglich des Druckers einer Maschinenart, die eine vorbestimmte Datei drucken kann, und zwar aus vielen Druckerinformationen, die in dem Druckeranzeigebereich (120) angezeigt werden, wenn die vielen Drucker (1) mit dem Dateiverwaltungsgerät (2) verbunden sind; und
einen Ausgrauanzeigeschritt (S52) zum Anzeigen der Druckerinformationen, die bei dem Extrahierschritt (S50) nicht extrahiert werden, in einer ausgegrauten Art, während die Datei durch die Zeigervorrichtung (7) abgelegt wird.

14. Computerprogrammprodukt gemäß einem der Ansprüche 8 bis 13, wobei das Computerprogrammprodukt des Weiteren Folgendes aufweist:
einen Extrahierschritt (S50) zum Extrahieren von Druckerinformationen bezüglich des Druckers einer Maschinenart, die eine vorbestimmte Datei drucken kann, und zwar aus vielen Druckerinformationen, die in dem Druckeranzeigebereich (120) angezeigt werden, wenn die vielen Drucker (1) mit dem Dateiverwaltungsgerät (2) verbunden sind; und
einen Bestätigungsschritt (S37) zum Zwingen eines Benutzers zum Bestätigen, ob eine Datei zu registrieren ist oder nicht, die zu dem Drucker (1) der Druckerinformationen zu transferieren ist, die bei dem Extrahierschritt (S50) extrahiert werden, und
wobei der Bestätigungsschritt (S37) den Benutzer zum Bestätigen dessen zwingt, ob die Datei in dem Drucker (1) der Druckerinformationen zu registrieren ist oder nicht, die bei dem Extrahierschritt (S50) extrahiert werden, wenn bestimmt wird, dass der Drucker (1), der bei dem Bestimmungsschritt (S34) verknüpft wird, nicht von einer Maschinenart ist, die die Datei drucken kann.

## Revendications

1. Dispositif de gestion de fichiers comprenant :
une unité d'affichage (5) qui est configurée pour afficher différents types d'informations ;
un dispositif de pointage (7) ; et
une unité de communication (30) qui est configurée pour communiquer avec une imprimante raccordée (1), dans laquelle le dispositif de gestion de fichiers utilise le logiciel d'exploitation (OS) Windows (marque déposée) qui comporte un système de fichiers sous le nom de produit "Explorer", dans lequel le système de fichiers est d'une structure arborescente et le produit "Explorer" peut lister les fichiers existants dans un répertoire sur une zone d'affichage de fichier (15) qui est configurée pour afficher un fichier sur l'unité d'affichage (5) ; dans lequel le dispositif de gestion de fichiers comporte en outre :
la zone d'affichage de fichier (15) qui est configurée pour afficher un fichier sur l'unité d'affichage (5) ;
une zone d'affichage d'imprimante (120) qui est configurée pour afficher des informations d'imprimante se rapportant à l'imprimante (1) à raccorder au dispositif de gestion de fichiers (2) sur l'unité d'affichage (5) ; et
une zone d'affichage de fichier enregistré (130) qui est configurée pour afficher un fichier enregistré de manière à être transféré à l'imprimante (1) sur l'unité d'affichage (5),
**caractérisé en ce que**
des informations d'imprimante raccordée concernant l'imprimante raccordée (1) raccordée au dispositif de gestion de fichiers (2) sont affichées dans la zone d'affichage d'imprimante (120) ; et
le dispositif de gestion de fichiers comprend en outre :
une unité d'association (20) qui est configurée pour associer le fichier à l'imprimante (1) correspondant aux informations d'imprimante lorsque le fichier affiché dans la zone d'affichage de fichier (15) est glissé et déposé sur les informations d'imprimante affichées dans la zone d'affichage d'imprimante (120) par le dispositif de pointage (7) ;
une unité de détermination (20) qui est configurée pour déterminer si l'imprimante associée (1) est ou non d'un type de machine apte à imprimer le fichier ; et
une unité de mémoire (25) qui est configurée pour mémoriser une combinaison entre l'imprimante associée (1) et le fichier lorsqu'il est déterminé que l'imprimante (1) associée par l'unité d'association (20) est d'un type de machine apte à imprimer le fichier ; et
une unité d'enregistrement (20) qui est configurée pour enregistrer le fichier de manière à ce qu'il soit transféré à l'imprimante (1) selon une combinaison mémorisée dans l'unité de mémoire (25) ;
le dispositif de gestion de fichiers comprend en outre les particularités a) et b) :
a) l'unité d'association (20) est configurée pour associer un fichier enregistré, destiné à être transféré à l'imprimante (1) correspondant aux informations d'imprimante, à l'imprimante raccordée (1) correspondant aux informations d'imprimante raccordée lorsque les informations d'imprimante affichées dans la zone d'affichage d'imprimante (120) sont glissées et déposées sur les informations d'imprimante raccordée affichées dans la zone d'affichage d'imprimante (120) avec le dispositif de pointage (7) ;
b) une unité de sélection d'imprimante (20) qui est configurée pour sélectionner des informations d'imprimante dont le fichier enregistré est affiché dans la zone d'affichage de fichier enregistré (130) à partir d'une pluralité des informations d'imprimante affichées dans la zone d'affichage d'imprimante (120) lorsque les imprimantes de la pluralité d'imprimantes (1) sont raccordées au dispositif de gestion de fichiers (2) ; et
l'unité d'association (20) est configurée pour associer, lorsque le fichier affiché dans la zone d'affichage de fichier enregistré (130) associé aux informations d'imprimante sélectionnées par l'unité de sélection d'imprimante (20) est glissé et déposé sur les informations d'imprimante raccordée au dispositif de pointage (7), le fichier à l'imprimante raccordée (1) correspondant aux informations d'imprimante raccordée ;
avec l'une quelconque des particularités a) et b), l'unité de communication (30) est configurée pour transférer le fichier à l'imprimante raccordée (1) lorsqu'il est déterminé que l'imprimante raccordée (1) associée par l'unité d'association (20) est d'un type de machine apte à imprimer le fichier.

2. Dispositif de gestion de fichiers selon la revendication 1,
dans lequel l'unité d'association (20), lorsque le fichier affiché dans la zone d'affichage de fichier (15) est glissé et déposé sur la zone d'affichage de fichier enregistré (130) par le dispositif de pointage (7), est configurée pour associer le fichier à l'imprimante (1) dont les informations d'imprimante sont affichées dans la zone d'affichage de fichier enregistré (130),
dans lequel l'unité d'enregistrement (20), lorsqu'il est déterminé que l'imprimante (1) associée par l'unité d'association (20) est d'un type de machine apte à imprimer le fichier, est configurée pour enregistrer le fichier de manière à ce qu'il soit transféré à l'imprimante (1).

3. Dispositif de gestion de fichiers selon l'une quelconque des revendications 1 à 2, dans lequel un type de l'imprimante (1) raccordée au dispositif de gestion de fichiers (2) est affiché dans la zone d'affichage d'imprimante (120) de manière identifiable.

4. Dispositif de gestion de fichiers selon l'une quelconque des revendications 1 à 3, comprenant en outre une unité d'alarme (20) qui est configurée pour émettre une alarme lorsqu'il est déterminé que l'imprimante (1) associée par l'unité d'association (20) est d'un type de machine non apte à imprimer le fichier. xxx

5. Dispositif de gestion de fichiers selon l'une quelconque des revendications 1 à 4, comprenant en outre :
une unité d'extraction (20) qui est configurée pour extraire des informations d'imprimante concernant l'imprimante du type de machine apte à imprimer un fichier prédéterminé à partir d'une pluralité d'informations d'imprimante affichées dans la zone d'affichage d'imprimante (120) lorsque les imprimantes de la pluralité d'imprimantes (1) sont raccordées au dispositif de gestion de fichiers (2) ; et
une unité de commande de clignotement (20) qui est configurée pour faire clignoter les informations d'imprimante extraites par l'unité d'extraction (20) pendant que le fichier est glissé avec le dispositif de pointage (7).

6. Dispositif de gestion de fichiers selon l'une quelconque des revendications 1 à 5, comprenant en outre :
une unité d'extraction (20) qui est configurée pour extraire des informations d'imprimante concernant l'imprimante du type de machine apte à imprimer un fichier prédéterminé à partir d'une pluralité d'informations d'imprimante affichées dans la zone d'affichage d'imprimante (120) lorsque les imprimantes de la pluralité d'imprimantes (1) sont raccordées au dispositif de gestion de fichiers (2) ; et
une unité de commande d'affichage en grisé (20) qui est configurée pour afficher les informations d'imprimante non extraites par le dispositif d'extraction (20) en grisé pendant que le fichier est glissé avec le dispositif de pointage (7).

7. Dispositif de gestion de fichiers selon l'une quelconque des revendications 1 à 6, comprenant en outre :
une unité d'extraction (20) qui est configurée pour extraire des informations d'imprimante concernant l'imprimante du type de machine apte à imprimer un fichier prédéterminé à partir d'une pluralité d'informations d'imprimante affichées sur la zone d'affichage d'imprimante (120) lorsque les imprimantes de la pluralité d'imprimantes (1) sont raccordées au dispositif de gestion de fichiers (2) ; et
une unité de confirmation (20) qui est configurée pour inviter un opérateur à confirmer si un fichier doit ou non être enregistré de manière à être transféré à l'imprimante (1) correspondant aux informations d'imprimante extraites par l'unité d'extraction (20), dans laquelle l'unité de confirmation (20) invite l'opérateur à confirmer si le fichier doit ou non être enregistré sur l'imprimante (1) correspondant aux informations d'imprimante extraites par l'unité d'extraction (20) lorsqu'il est déterminé que l'imprimante (1) associée par l'unité d'association (20) n'est pas d'un type de machine apte à imprimer le fichier.

8. Produit formant programme informatique qui est utilisé et exécuté par un dispositif de gestion de fichiers (2), le dispositif de gestion de fichiers (2) utilise le système d'exploitation (OS) Windows (marque déposée) qui comporte un système de fichiers sous le nom de produit "Explorer", dans lequel le système de fichiers est d'une structure arborescente et le produit "Explorer" peut lister des fichiers existants dans un répertoire d'une zone d'affichage de fichier (15) qui affiche un fichier sur une unité d'affichage (5), le dispositif de gestion de fichiers (2) comprenant :
un support d'enregistrement qui peut être lu par le dispositif de gestion de fichiers (2) ; et
un programme informatique mémorisé sur le support d'enregistrement qui peut être lu par le dispositif de gestion de fichiers (2), dans lequel le programme informatique comprend :
une étape d'affichage d'informations d'imprimante (S21) destinée à afficher des informations d'imprimante concernant une imprimante (1) à raccorder au dispositif de gestion de fichiers (2) sur une zone d'affichage d'imprimante (120) ; et
une étape d'affichage de fichier enregistré (S103) destinée à afficher un fichier enregistré de manière à être transféré à l'imprimante (1) dans une zone d'affichage de fichier enregistré (130),
**caractérisé en ce que**
des informations d'imprimante raccordée concernant l'imprimante raccordée (1) raccordée au dispositif de gestion de fichiers (2) sont affichées dans la zone d'affichage d'imprimante (120) ;
le produit formant programme informatique comprend en outre :
une première étape d'association (S31-2) destinée à associer un fichier à l'imprimante (1) correspondant aux informations d'imprimante lorsque le fichier affiché dans une zone d'affichage de fichier (15) est glissé et déposé sur les informations d'imprimante affichées dans la zone d'affichage d'imprimante (120) par un dispositif de pointage (7) ;
une étape de détermination (S34) destinée à déterminer si l'imprimante associé (1) est ou non du type de machine apte à imprimer le fichier ; et
une étape d'enregistrement (S35) destinée à enregistrer le fichier de manière ce qu'il soit transféré à l'imprimante (1) selon une association de l'imprimante associée (1) et du fichier lorsqu'il est déterminé que l'imprimante (1) associée à l'étape de détermination (S34) est d'un type de machine apte à imprimer le fichier ;
le produit formant programme informatique comprend en outre les particularités a) et b) :
a) une troisième étape d'association (S63-2) destinée à associer un fichier, enregistré de manière à ce qu'il soit transféré à l'imprimante (1) correspondant aux informations d'imprimante, à l'imprimante raccordée (1) correspondant aux informations d'imprimante raccordée lorsque les informations d'imprimante affichées dans la zone d'affichage d'imprimante (120) sont glissées et déposées sur les informations d'imprimante raccordée affichées dans la zone d'affichage d'imprimante (120) avec le dispositif de pointage (7) ;
b) une étape de sélection d'imprimante (S38) destinée à sélectionner des informations d'imprimante dont le fichier enregistré est affiché dans la zone d'affichage de fichier enregistré (130) à partir d'une pluralité d'informations d'imprimante affichées dans la zone d'affichage d'imprimante (120) lorsque les imprimantes de la pluralité d'imprimantes (1) sont raccordées au dispositif de gestion de fichiers (2) ;
lorsque le fichier affiché dans la zone d'affichage de fichier enregistré (130) associé aux informations d'imprimante sélectionnées par l'unité de sélection d'imprimante (20) est glissé et déposé sur les informations d'imprimante raccordée au dispositif de pointage (7), il est prévu une quatrième étape d'association (S81-2) destinée à associer le fichier à l'imprimante raccordée (1) correspondant aux informations d'imprimante raccordée ; et
dans l'une quelconque des particularités a) à b), il est prévu une étape de transfert destinée à transférer le fichier vers l'imprimante raccordée (1) lorsqu'il est déterminé que l'imprimante raccordée (1) associée à l'étape d'association est d'un type de machine apte à imprimer le fichier.

9. Produit formant programme informatique selon la revendication 8, dans lequel le programme informatique comprend en outre :
lorsque le fichier affiché dans la zone d'affichage de fichier (15) est glissé et déposé sur la zone d'affichage de fichier enregistré (130) par le dispositif de pointage (7), il est prévu une deuxième étape d'association (S32-2) destinée à associer un fichier à l'imprimante (1) dont les informations d'imprimante sont affichées dans la zone d'affichage de fichier enregistré (130), et
lorsqu'il est déterminé que l'imprimante (1) associée à la deuxième étape d'association (S32-2) est d'un type de machine apte à imprimer le fichier, l'étape d'enregistrement (S35) enregistre le fichier de manière à ce qu'il soit transféré à l'imprimante (1).

10. Produit formant programme informatique selon l'une quelconque des revendications 8 à 9, dans lequel un type de l'imprimante (1) raccordée au dispositif de gestion de fichiers (2) est affiché dans la zone d'affichage d'imprimante (120) d'une manière identifiable.

11. Produit formant programme informatique selon l'une quelconque des revendications 8 à 10, dans lequel le programme informatique comprend en outre une étape d'alarme destinée à émettre une alarme lorsqu'il est déterminé que l'imprimante (1) associée à l'étape de détermination (S34) est d'un type de machine non apte à imprimer le fichier.

12. Produit formant programme informatique selon l'une quelconque des revendications 8 à 11, dans lequel le programme informatique comprend en outre :
une étape d'extraction (S50) destinée à extraire des informations d'imprimante concernant l'imprimante d'un type de machine apte à imprimer un fichier prédéterminé à partir d'une pluralité d'informations d'imprimante affichées dans la zone d'affichage d'imprimante (120) lorsque les imprimantes de la pluralité d'imprimantes (1) sont raccordées au dispositif de gestion de fichiers (2) ; et
une étape d'affichage clignotant (S54) destinée à afficher les informations d'imprimante extraites à l'étape d'extraction (S50) de manière clignotante pendant que le fichier est glissé avec le dispositif de pointage (7).

13. Produit formant programme informatique selon l'une quelconque des revendications 8 à 12, dans lequel le programme informatique comprend en outre :
une étape d'extraction (S50) destinée à extraire des informations d'imprimante concernant l'imprimante d'un type de machine apte à imprimer un fichier prédéterminé à partir d'une pluralité d'informations d'imprimante affichées dans la zone d'affichage d'imprimante (120) lorsque les imprimantes de la pluralité d'imprimantes (1) sont raccordées au dispositif de gestion de fichiers (2) ; et
une étape d'affichage en grisé (S52) destinée à afficher les informations d'imprimante non extraites à l'étape d'extraction (S50) en grisé pendant que le fichier est glissé avec le dispositif de pointage (7).

14. Produit formant programme informatique selon l'une quelconque des revendications 8 à 13, dans lequel programme informatique comprend en outre :
une étape d'extraction (S50) destinée à extraire des informations d'imprimante concernant l'imprimante d'un type de machine apte à imprimer un fichier prédéterminé à partir d'une pluralité d'informations d'imprimante affichées dans la zone d'affichage d'imprimante (120) lorsque les imprimantes de la pluralité d'imprimantes (1) sont raccordées au dispositif de gestion de fichiers (2) ; et
une étape de confirmation (S37) destinée à inviter un opérateur à confirmer si un fichier doit ou non être enregistré de manière à être transféré à l'imprimante (1) correspondant aux informations d'imprimante extraites à l'étape d'extraction (S50), et
l'étape de confirmation (S37) invite l'opérateur à confirmer si le fichier doit ou non être enregistré sur l'imprimante (1) correspondant aux informations d'imprimante extraites à l'étape d'extraction (S50) lorsqu'il est déterminé que l'imprimante (1) associée à l'étape de détermination (S34) n'est pas du type de machine apte à imprimer le fichier.
